# EUROPEAN PATENT APPLICATION

(11) **EP 4 783 698 A1**
(43) Date of publication of application: **29.07.2026**
(21) Application number: 23952730.2
(22) Date of filing: 22.09.2023
(51) Int. Cl.: H04W 72/0457

(54) **WIRELESS COMMUNICATION METHOD AND COMMUNICATION DEVICE**

(71) Applicant: GUANGDONG OPPO MOBILE TELECOMMUNICATIONS CORP., LTD., Dongguan, Guangdong 523860 (CN)
(72) Inventor: LI, Yapu, Dongguan, Guangdong 523860 (CN); LUO, Chaoming, Dongguan, Guangdong 523860 (CN); LU, Liuming, Dongguan, Guangdong 523860 (CN); GAO, Ning, Dongguan, Guangdong 523860 (CN)
(74) Representative: RGTH
(86) International application number: PCT/CN2023/120780
(87) International publication number: WO 2025/060078

(57) **Abstract**

Provided are a wireless communication method and a communication device. The method comprises: a first AP sends a first trigger frame, the first trigger frame comprising first information and second information, wherein the first information is used for instructing a second AP to perform multi-AP cooperative transmission on a first bandwidth, the second information is used for instructing a first STA to communicate with the first AP on a second bandwidth, and the first bandwidth and the second bandwidth both belong to the operating bandwidth of the first AP. In the present invention, hybrid transmission involving multi-AP cooperative transmission and single-AP transmission can be implemented on the operating bandwidth of the first AP. Firstly, the invention is capable of utilizing the bandwidth on which multi-AP cooperative transmission cannot be performed, thereby improving the utilization efficiency of the frequency spectrum; secondly, the invention reduces limitations on the operating bandwidth of shared APs, allowing more diversified shared APs to participate in multi-AP cooperative transmission; and furthermore, the remaining bandwidth of multi-AP cooperative transmission is not idle, thus preventing the second bandwidth from being preempted by other APs or STAs due to being idle for too long.

## Description

### TECHNICAL FIELD

This application relates to the field of communications technologies, and more specifically, to a wireless communication method and a communications device.

### BACKGROUND

With the development of technologies, technical solutions for multi-access point (access point, AP) coordination have been proposed in communication standards of the institute of electrical and electronics engineers (institute of electrical and electronics engineers, IEEE). Multi-AP coordination may allow a plurality of APs to share transmission resources, thereby improving utilization of transmission resources.

In some cases, a portion of an operating bandwidth of a sharing AP cannot be used for multi-AP coordinated transmission. For example, in a case in which an operating bandwidth of a shared AP is less than the operating bandwidth of the sharing AP, a portion of the operating bandwidth of the sharing AP other than the operating bandwidth of the shared AP cannot be used for multi-AP coordinated transmission. In a related technology, no corresponding solution has been clearly defined.

### SUMMARY

This application provides a wireless communication method and a communications device. The following describes the aspects related to this application.

According to a first aspect, a wireless communication method is provided, and the method includes: transmitting, by a first AP, a first trigger frame (trigger frame, TF), where the first trigger frame includes first information and second information, the first information is used to instruct a second AP to perform multi-AP coordinated transmission on a first bandwidth, the second information is used to instruct a first station (station, STA) to communicate with the first AP on a second bandwidth, and both the first bandwidth and the second bandwidth belong to an operating bandwidth of the first AP.

According to a second aspect, a wireless communication method is provided, and the method includes: receiving, by a first device, a first trigger frame transmitted by a first AP, where the first device includes a second AP and/or a first STA, the first trigger frame includes first information and second information, the first information is used to instruct the second AP to perform multi-AP coordinated transmission on a first bandwidth, the second information is used to instruct the first STA to communicate with the first AP on a second bandwidth, and both the first bandwidth and the second bandwidth belong to an operating bandwidth of the first AP.

According to a third aspect, a communications device is provided. The communications device is a first AP, and the communications device includes: a transmitting unit, configured to transmit a first trigger frame, where the first trigger frame includes first information and second information, the first information is used to instruct a second AP to perform multi-AP coordinated transmission on a first bandwidth, the second information is used to instruct a first STA to communicate with the first AP on a second bandwidth, and both the first bandwidth and the second bandwidth belong to an operating bandwidth of the first AP.

According to a fourth aspect, a communications device is provided. The communications device is a first device, and the device includes: a receiving unit, configured to receive a first trigger frame transmitted by a first AP, where the first device includes a second AP and/or a first STA, the first trigger frame includes first information and second information, the first information is used to instruct a second AP to perform multi-AP coordinated transmission on a first bandwidth, the second information is used to instruct a first STA to communicate with the first AP on a second bandwidth, and both the first bandwidth and the second bandwidth belong to an operating bandwidth of the first AP.

According to a fifth aspect, there is provided a communications device. The communications device includes a processor and a memory. The memory is configured to store one or more computer programs, and the processor is configured to invoke the computer program in the memory to cause the communications device to perform some or all of the steps of the method according to the first aspect and/or the second aspect.

According to a sixth aspect, an embodiment of this application provides a communications system, and the communications system includes the foregoing communications device. In another possible design, the system may further include another device that interacts with the communications device in the solutions provided in embodiments of this application.

According to a seventh aspect, an embodiment of this application provides a computer-readable storage medium. The computer-readable storage medium stores a computer program, and the computer program causes a communications device to perform some or all of the steps in a method according to the foregoing aspects.

According to an eighth aspect, an embodiment of this application provides a computer program product. The computer program product includes a non-transitory computer-readable storage medium storing a computer program, and the computer program is operable to cause a communications device to perform some or all of the steps of a method according to the foregoing aspects. In some implementations, the computer program product may be a software installation package.

According to a ninth aspect, an embodiment of this application provides a chip. The chip includes a memory and a processor. The processor may invoke a computer program from the memory and run the computer program, to implement some or all of the steps described in the method according to the foregoing aspects.

According to this application, hybrid transmission of multi-AP coordinated transmission and single-AP (single-AP) transmission may be implemented on the operating bandwidth of the first AP. According to this application, a bandwidth that cannot be used for multi-AP coordinated transmission may be used for performing single-AP transmission, thereby improving spectrum utilization efficiency. In addition, according to this application, limitations imposed on an operating bandwidth of a shared AP may be reduced, allowing a greater variety of shared APs to participate in multi-AP coordinated transmission. Furthermore, according to this application, a remaining bandwidth not used for multi-AP coordinated transmission may be maximumly prevented from being idle, thereby avoiding a case in which the bandwidth remains idle for too long and is preempted by another AP or STA.

### BRIEF DESCRIPTION OF DRAWINGS

FIG. 1 is a schematic diagram of a wireless communications system to which embodiments of this application are applicable.
FIG. 2 is an example diagram of a scenario of multi-AP coordinated transmission.
FIG. 3 is an example diagram of a coordinated transmission bandwidth during coordinated orthogonal frequency division multiple access (coordinated orthogonal frequency division multiple access, C-OFDMA) transmission.
FIG. 4 is an example diagram of coordinated uplink multi-user multiple-input multiple-output (uplink multi user multiple input multiple output, UL MU-MIMO) transmission.
FIG. 5 is an example diagram of coordinated beamforming/null steering.
FIG. 6 is an example diagram of coordinated spatial reuse.
FIG. 7 is an example diagram of multi-AP joint transmission.
FIG. 8 is an example diagram of coordinated time division multiple access (coordinated time division multiple access, C-TDMA).
FIG. 9A is an example diagram of a scenario in which an operating bandwidth of a sharing AP is equal to an operating bandwidth of a shared AP.
FIG. 9B is an example diagram of a scenario in which an operating bandwidth of a sharing AP is greater than an operating bandwidth of a shared AP.
FIG. 9C is an example diagram of a scenario in which an operating bandwidth of a sharing AP is less than an operating bandwidth of a shared AP.
FIG. 10 is a schematic flowchart of a wireless communication method according to an embodiment of this application.
FIG. 11A is a schematic diagram of a format of a first trigger frame according to an embodiment of this application.
FIG. 11B is a schematic diagram of a format of a common information field.
FIG. 11C is a schematic diagram of a format of a special user information field.
FIG. 11D is a schematic diagram of a format of a variant user information field.
FIG. 12 is a schematic diagram of a format of an ultra-high reliability (ultra-high reliability, UHR) physical layer protocol data unit (physical layer protocol data unit, PPDU).
FIG. 13 is an example diagram of a frequency aggregated-physical layer protocol data unit (frequency aggregated-physical layer protocol data unit, FA-PPDU).
FIG. 14 is a schematic diagram of a hybrid transmission process according to Embodiment 1 of this application.
FIG. 15A is a schematic diagram of a scenario to which Embodiment 2 of this application is applicable.
FIG. 15B is a schematic diagram of a first bandwidth and a second bandwidth according to Embodiment 2 of this application.
FIG. 15C is a schematic diagram of a hybrid transmission process according to Embodiment 2 of this application.
FIG. 16A is a schematic diagram of a scenario to which Embodiment 3 of this application is applicable.
FIG. 16B is a schematic diagram of a first bandwidth and a second bandwidth according to Embodiment 3 of this application.
FIG. 16C is a schematic diagram of a hybrid transmission process according to Embodiment 3 of this application.
FIG. 17 is a schematic structural diagram of a communications device according to an embodiment of this application.
FIG. 18 is a schematic structural diagram of another communications device according to an embodiment of this application.
FIG. 19 is a schematic structural diagram of an apparatus used for communication according to an embodiment of this application.

### DESCRIPTION OF EMBODIMENTS

Technical solutions in this application are described below with reference to the accompanying drawings.

### Communications system

The technical solutions in embodiments of this application may be applied to various communications systems, for example, a wireless local area network (wireless local area networks, WLAN), wireless fidelity (wireless fidelity, WiFi), or another communications system.

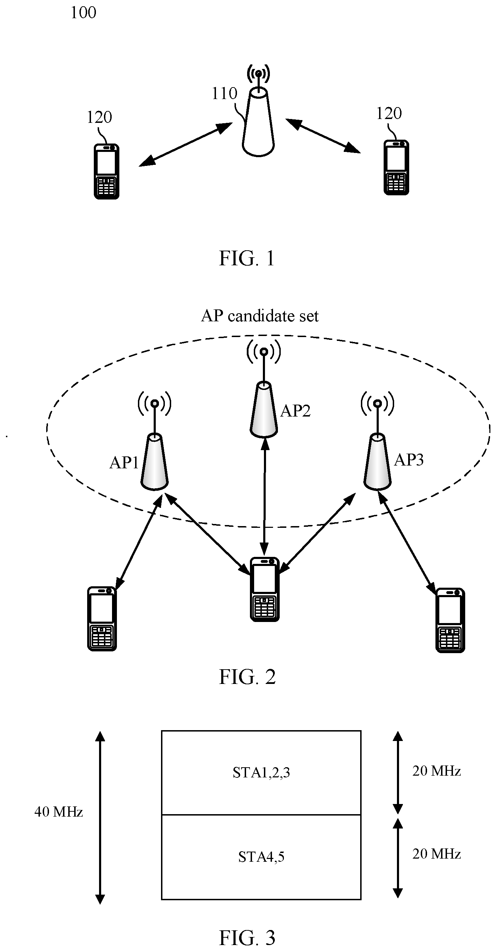

FIG. 1 shows a wireless communications system 100 to which embodiments of this application are applied. The wireless communications system 100 may include an access point (access point, AP) 110 and stations (station, STA) 120 that access a network via the access point 110.

In some scenarios, an AP is referred to as an AP STA. In other words, in a sense, the AP is also a STA.

In some scenarios, a STA is referred to as a non-AP STA (non-AP STA).

Communication in the communications system 100 may be communication between an AP and a STA, or communication between STAs, or communication between a STA and a peer STA (peer STA). The peer STA may refer to a device that performs peer-to-peer communication with the STA. For example, the peer STA may be an AP, or may be a STA.

An AP is equivalent to a bridge that connects a wired network and a wireless network. A major function of the AP is to connect clients in a wireless network together and then connects the wireless network to an Ethernet. An AP device may be a terminal device (for example, a mobile phone (mobile phone)) or a network device (for example, a router) that has a Wi-Fi chip.

It should be understood that a role of a STA in a communications system is not absolute. For example, in some scenarios, when a mobile phone is connected to a router, the mobile phone is a STA; and when the mobile phone serves as a hotspot for another mobile phone, the mobile phone serves as an AP.

The AP and the STA may be devices applied in vehicle-to-everything; internet of things nodes, sensors, and the like in internet of things (internet of things, IoT); intelligent cameras, intelligent remote controls, intelligent water meters, intelligent electricity meters, and the like in smart home; and sensors and the like in smart city.

In some embodiments, both the STA and the AP may support the 802.11be standard. The STA or the AP may alternatively support a plurality of current and future WLAN standards of the 802.11 family, such as 802.1 1ax, 802.11ac, 802.11n, 802.11g, 802.11b, and 802.11a.

There are one or more links between a station and an access point. In some embodiments, both a station and an access point support multi-band communication, for example, simultaneous communication on frequency bands such as 2.4 GHz, 5 GHz, 6 GHz, 45 GHz, and 60 GHz, or simultaneous communication on different channels of a same frequency band (or different frequency bands). This improves communication throughput and/or reliability between devices. Such a device is usually referred to as a multi-band device, or a multi-link device (multi-link device, MLD), and is sometimes also referred to as a multi-link entity or a multi-band entity. The multi-link device may be an access point device, or may be a station device. If the multi-link device is an access point device, the multi-link device includes one or more APs. If the multi-link device is a station device, the multi-link device includes one or more non-AP STAs.

A multi-link device including one or more APs may be referred to as an access point multi-link device (access point multi-link device, AP MLD), and a multi-link device including one or more non-AP STAs may be referred to as a non-access point multi-link device (non-ap multi-link device, Non-AP MLD).

In embodiments of this application, an AP may include a plurality of APs, and a non-AP may include a plurality of STAs. A plurality of links may be formed between the APs in the AP and the STAs in the non-AP, and data communication may be performed between an AP in the AP and a corresponding STA in the non-AP by using a corresponding link.

In embodiments of this application, the STA may be any one of the following that supports the WLAN/Wi-Fi technology: a mobile phone, a tablet computer (Pad), a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in remote medical surgery (remote medical surgery), a wireless terminal in smart grid (smart grid), a wireless terminal in transportation safety (transportation safety), a wireless terminal in smart city (smart city), a wireless terminal in smart home (smart home), or the like.

Frequency bands supported in the WLAN technology may include but are not limited to a low frequency band (for example, 2.4 GHz, 5 GHz, or 6 GHz) and a high frequency band (for example, 45 GHz or 60 GHz).

FIG. 1 exemplarily shows one AP and two STAs. Optionally, the communications system 100 may include a plurality of APs and another quantity of STAs. This is not limited in embodiments of this application.

It should be understood that in embodiments of this application, a device having a communication function in a network or a system may be referred to as a communications device. The communications system 100 shown in FIG. 1 is used as an example. A communications device may include the access point 110 and the stations 120 that have a communication function. The access point 110 and the stations 120 may be specific devices described above. Details are not described herein again. The communications device may further include another device in the communications system 100, such as a network controller, a gateway, or another network entity, which is not limited in embodiments of this application.

The AP and the STA may be deployed on land, including being deployed indoors or outdoors, handheld, or vehicle-mounted, may be deployed on a water surface, or may be deployed on a plane, a balloon, or a satellite in the air. In embodiments of this application, a scenario in which the AP and the STA are located is not limited.

It should be understood that all or some of functions of the communications device in this application may alternatively be implemented by software functions running on hardware, or by virtualization functions instantiated on a platform (for example, a cloud platform).

### Multi-AP (multi-AP) coordinated transmission

With the development of technologies, technical solutions for multi-AP coordination are proposed in some communication standards (for example, IEEE 802.11 UHR (Wi-Fi 8)). Multi-AP coordination may allow a plurality of APs to share transmission resources, thereby improving utilization of transmission resources.

The following describes some terms related to multi-AP coordination.

An AP candidate set (AP candidate set) may refer to a set of APs that can initiate or participate in multi-AP coordination.

A sharing AP (sharing AP) may refer to an AP that obtains a TXOP and initiates multi-AP coordination. At least one AP in an AP candidate set can become the sharing AP.

A shared AP (shared AP) may participate in multi-AP coordination initiated by a sharing AP in a same AP candidate set.

Multi-AP coordination may include a multi-AP coordination preparation phase and a multi-AP coordinated communication phase (or referred to as a multi-AP coordinated transmission phase), each of which is described below.

In the multi-AP coordination preparation phase, a sharing AP obtains a TXOP and initiates multi-AP coordination. The sharing AP may transmit a first frame to one or more APs in a same AP candidate set, to inquire about an intention of each AP to participate in the multi-AP coordination. One or more APs may respond with a second frame to notify the sharing AP whether the one or more APs intend to participate in the multi-AP coordination. If an AP intends to participate in the multi-AP coordination, the AP becomes a shared AP in the multi-AP coordination.

In the multi-AP coordinated communication phase, the sharing AP and one or more shared APs may participate in multi-AP coordinated transmission. Alternatively, the sharing AP may not participate in the multi-AP coordinated transmission, and two or more shared APs may participate in the multi-AP coordinated transmission.

FIG. 2 is an example diagram of an AP candidate set. The AP candidate set shown in FIG. 2 includes three APs: an AP 1, an AP 2, and an AP 3. For example, the AP 1 may serve as a sharing AP to acquire a TXOP and initiate multi-AP coordination; and the AP 2 and the AP 3 may serve as shared APs to participate in the multi-AP coordination. The AP 1, the AP 2, and the AP 3 may participate in the multi-AP coordination in the TXOP. For another example, the AP 2 may obtain a TXOP and serve as a sharing AP to initiate multi-AP coordination; and the AP 1 and the AP 3 may serve as shared APs to participate in the multi-AP coordination. In the TXOP, the AP 1 and the AP 3 may participate in multi-AP coordinated transmission, but the AP 2 may not participate in the multi-AP coordinated transmission.

A multi-AP transmission mode may include coordinated UL MU-MIMO, coordinated beamforming (coordinated beamforming, C-BF), coordinated spatial reuse (coordinated spatial reuse, C-SR), multi-AP joint transmission (joint transmission), C-TDMA, C-OFDMA, and the like, each of which is described below.

### C-OFDMA

During C-OFDMA transmission, a sharing AP and/or one or more shared APs may transmit respective DL MU PPDUs or transmit TB PPDUs for requesting uplink data to their respective associated STAs, on different frequency portions of a coordinated transmission bandwidth.

FIG. 3 is an example diagram of a coordinated transmission bandwidth during C-OFDMA transmission. As shown in FIG. 3, the coordinated transmission bandwidth is 40 MHz. In a 20-MHz portion of the 40-MHz bandwidth, an AP participating in multi-AP transmission may exchange data with an associated STA 1, STA 2, or STA 3. In the other 20-MHz portion of the 40-MHz bandwidth, another AP participating in multi-AP transmission may exchange data with an associated STA 4 or STA 5.

### Coordinated UL MU-MIMO

During multi-AP coordinated UL MU-MIMO transmission, a sharing AP and/or one or more shared APs may transmit TB PPDUs for requesting uplink data on an entire coordinated transmission bandwidth, and each non-AP STA is allocated with a different spatial stream. For example, the one or more APs participating in multi-AP coordination may transmit coordinated UL trigger frames to respective associated STAs, and in response to the coordinated UL trigger frames, the STAs may transmit uplink data frames. Uplink data frames transmitted by all the STAs may be completely aligned.

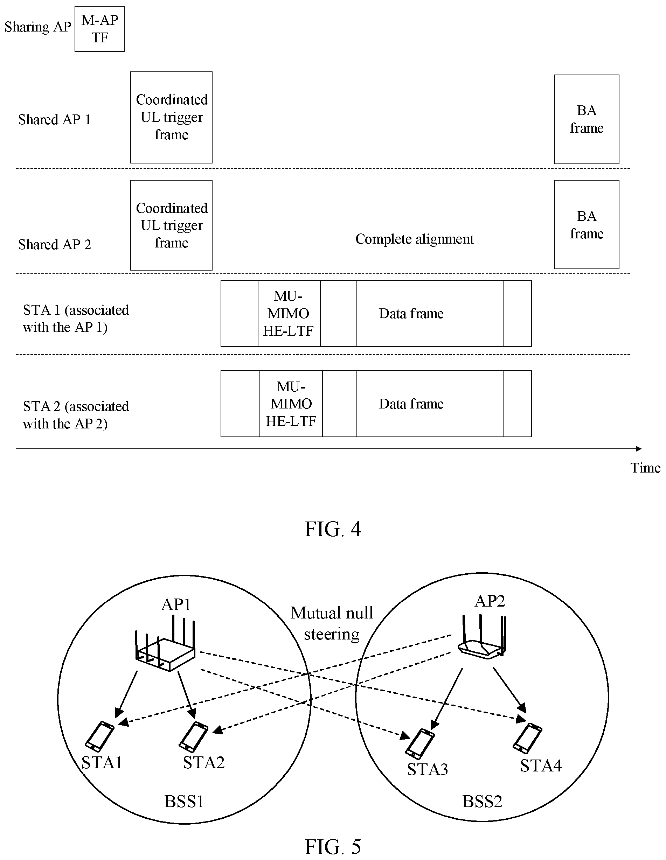

FIG. 4 is an example diagram of coordinated UL MU-MIMO transmission. As shown in FIG. 4, a shared AP 1 (an AP 1 for short) is associated with a STA 1, and a shared AP 2 (an AP 2 for short) is associated with a STA 2. A sharing AP transmits a multi-AP trigger frame (multi-AP trigger frame, M-AP TF). The AP 1 transmits a coordinated UL trigger frame to the STA 1. The AP 2 transmits a coordinated UL trigger frame to the STA 2. Each of the STA 1 and the STA 2 transmits a UL PPDU including a data frame. The UL PPDUs transmitted by the STA 1 and the STA 2 are completely aligned. After receiving the UL PPDU transmitted by the STA 1, the AP 1 transmits a block acknowledgment (block acknowledge, BA) frame to the STA 1. After receiving the UL PPDU transmitted by the STA 2, the AP 2 transmits a BA frame to the STA 2.

### Coordinated beamforming

Coordinated beamforming follows a principle similar to that of null steering (null steering), and may implement interference suppression. For example, during data transmission/reception, APs may enhance a beam directed toward a target STA. For another example, during data transmission/reception, an AP may steer spatial radiation toward a non-target STA to zero.

FIG. 5 is an example diagram of coordinated beamforming/null steering. As shown in FIG. 5, an AP 1, a STA 1, and a STA 2 belong to a basic service set (basic service set, BSS) 1; and an AP 2, a STA 3, and a STA 4 belong to a BSS 2. Each of the AP 1 and the AP 2 performs null steering on STAs within the BSS of the other. In other words, the AP 1 steers spatial radiation toward the STA 3 and the STA 4 to zero, and the AP 2 steers spatial radiation toward the STA 1 and the STA 2 to zero.

### Coordinated spatial reuse

The coordinated spatial reuse may refer to reducing interference between APs through joint power control, thereby allowing a plurality of APs to perform parallel transmission, and maximizing the total throughput.

Since synchronization and channel state information (channel state information, CSI) collection are not required to be considered, physical layer (physical layer, PHY) modifications are not required, and protocol updates are not required for STAs, coordinated spatial reuse may be implemented with relatively low complexity. In other words, compared with other multi-AP coordination schemes, coordinated spatial reuse may achieve low-complexity and high-performance (throughput and latency) gains.

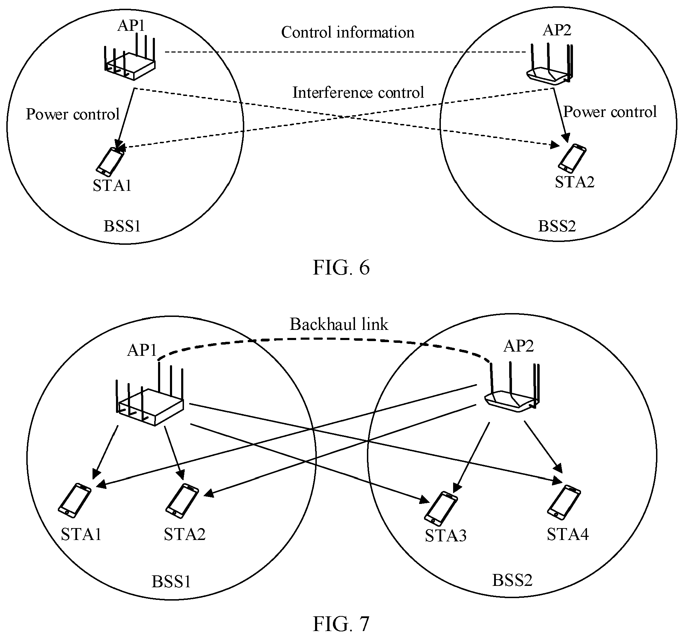

FIG. 6 is an example diagram of coordinated spatial reuse. As shown in FIG. 6, an AP 1 and a STA 1 belong to a BSS 1, and an AP 2 and a STA 2 belong to a BSS 2. Control information may be transmitted between the AP 1 and the AP 2. Each of the AP 1 and the AP 2 may perform interference control on the STA in the BSS of the other based on the control information. In other words, the AP 1 may perform interference control on the STA 2, and the AP 2 may perform interference control on the STA 1.

### Multi-AP joint transmission

Multi-AP joint transmission (referred to as joint transmission for short) refers to that at least two APs simultaneously transmit data to a target user (that is, a target STA). Data transmitted by a plurality of APs occupy completely the same frequency-domain resources (coordinated bandwidth) and are distinguished by different spatial streams. For a target STA that receives the data, joint transmission is transparent. In other words, the target STA cannot determine whether the received data is transmitted through multi-AP joint transmission. Before the joint transmission, data destined for the same target STA may be transmitted between APs via a backhaul link (backhaul link). Backhaul messages may be transmitted between APs using either wired connections or wireless connections.

FIG. 7 is an example diagram of multi-AP joint transmission. As shown in FIG. 7, an AP 1 and an AP 2 may implement multi-AP joint transmission. The AP 1 and the AP 2 may simultaneously transmit data to one or more of a STA 1, a STA 2, a STA 3, and a STA 4. The STA 1 and the STA 2 may belong to a BSS 1. The STA 3 and the STA 4 may belong to a BSS 2. Data destined for the same STA may be transmitted between the AP 1 and the AP 2 via a backhaul link.

Compared with single-AP transmission, multi-AP joint transmission may increase a quantity of antennas, thereby increasing a total quantity of spatial streams. In addition, multi-AP joint transmission may serve a plurality of STAs at a time, thereby improving the system throughput. In addition, multi-AP joint transmission may allow the target STA to receive channels from a plurality of locations, thereby enhancing transmission reliability.

### C-TDMA

C-TDMA may refer to that a sharing AP allocates, to a shared AP, a specific time period in a TXOP obtained by the sharing AP. Within the time period allocated to the shared AP, the shared AP may perform any PPDU transmission, including transmitting a DL PPDU or requesting an UL PPDU.

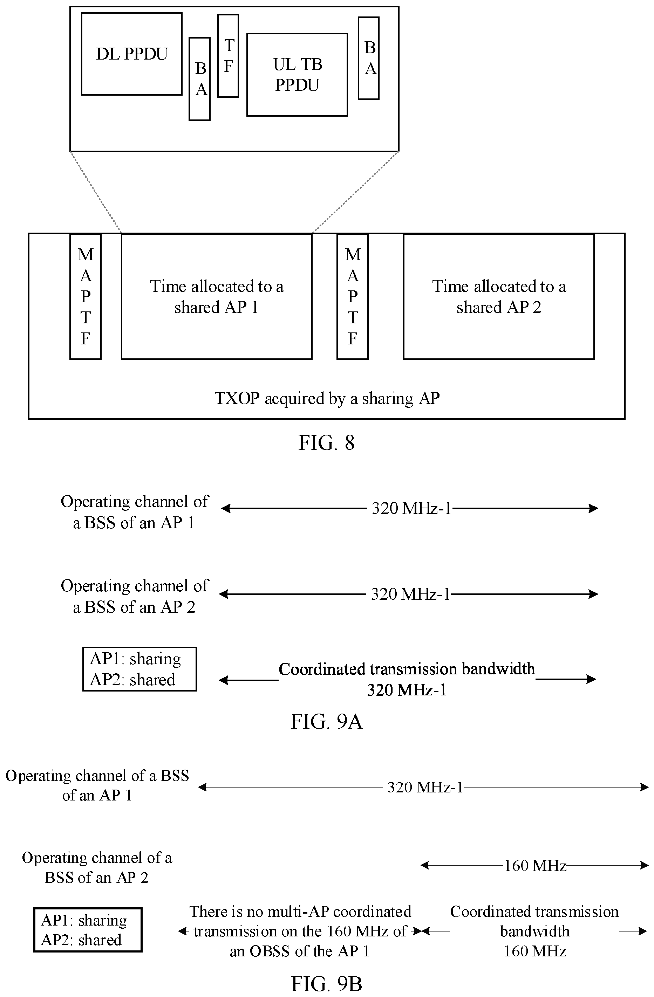

FIG. 8 is an example diagram of C-TDMA. As shown in FIG. 8, the TXOP acquired by the sharing AP (TXOP gained by sharing AP) may be allocated to a shared AP 1 and a shared AP 2. Within time allocated to the shared AP (time allocation given to shared AP1), the shared AP 1 may transmit a DL PPDU and receive a corresponding BA frame, or within the time allocated to the shared AP, the shared AP 1 may transmit a trigger frame, so as to request an uplink trigger-based (trigger based, TB) PPDU.

### Multi-AP coordinated transmission procedure

When performing multi-AP coordinated transmission, a sharing AP first transmits a multi-AP trigger frame (multi-AP trigger frame). The multi-AP trigger frame may indicate one or more of the following information: a multi-AP coordinated transmission mode, a PPDU parameter, or other information.

The multi-AP coordinated transmission mode may include: C-OFDMA, coordinated UL MU-MIMO, C-BF, C-SR, multi-AP joint transmission, or C-TDMA.

The PPDU parameter may include one or more of the following: an uplink or downlink indication, a bandwidth, a quantity of HE/EHT/UHR-LTF symbols, an LDPC extra symbol segment (LDPC extra symbol segment), a pre-FEC padding factor, PE disambiguity (PE Disambiguity), resource unit (resource unit, RU) allocation, an FEC encoding type, a modulation and coding scheme (modulation and coding scheme, MCS), or spatial stream allocation.

Each shared AP that receives the multi-AP trigger frame may prepare and transmit a downlink PPDU according to indication of the multi-AP trigger frame. In addition, triggered shared APs may further perform phase offset estimation and time synchronization by using the multi-AP trigger frame.

### Bandwidth for multi-AP coordinated transmission

A plurality of APs participating in multi-AP coordinated transmission may have a same operating bandwidth or different operating bandwidths, which leads to different cases of coordinated transmission bandwidths (hereinafter referred to as coordinated bandwidth) used for performing multi-AP coordinated transmission by the APs. For example, a plurality of APs are required to perform non-C-OFDMA multi-AP coordinated transmission on an overlapping operating bandwidth. In other words, the coordinated bandwidth is required to belong to the overlapping operating bandwidth. The coordinated bandwidth is described below with reference to three cases by using a sharing AP and a shared AP as examples.

In Case 1, an operating bandwidth of the sharing AP is equal to an operating bandwidth of the shared AP.

For Case 1, the operating bandwidth of the sharing AP or the operating bandwidth of the shared AP may be the coordinated bandwidth.

FIG. 9A is an example diagram of Case 1. As shown in FIG. 9A, an AP 1 is the sharing AP, and an AP 2 is the shared AP. An operating channel of a BSS of the AP 1 has a bandwidth of 320 MHz (denoted as 320 MHz-1 in FIG. 9A), and an operating channel of a BSS of the AP 2 also has a bandwidth of 320 MHz. In addition, the operating channel of the BSS of the AP 1 completely overlaps with the operating channel of the BSS of the AP 2. Therefore, a coordinated bandwidth used for performing multi-AP coordinated transmission by the AP 1 and the AP 2 may be a 320-MHz bandwidth.

In Case 2, the operating bandwidth of the sharing AP is greater than the operating bandwidth of the shared AP.

For Case 2, the operating bandwidth of the shared AP may be the coordinated bandwidth.

FIG. 9B is an example diagram of Case 2. As shown in FIG. 9B, an AP 1 is the sharing AP, and an AP 2 is the shared AP. An operating channel of a BSS of the AP 1 has a bandwidth of 320 MHz (denoted as 320 MHz-1 in FIG. 9B), and an operating channel of a BSS of the AP 2 has a bandwidth of 160 MHz. It may be seen from FIG. 9B that, a coordinated bandwidth used for performing multi-AP coordinated transmission by the AP 1 and the AP 2 is the 160MHz bandwidth corresponding to the operating channel of the BSS of the AP 2. The remaining lower 160 MHz bandwidth of the BSS of the AP 1 cannot be used for the multi-AP coordinated transmission.

In Case 3, the operating bandwidth of the sharing AP is less than the operating bandwidth of the shared AP.

For Case 3, the operating bandwidth of the sharing AP may be the coordinated bandwidth.

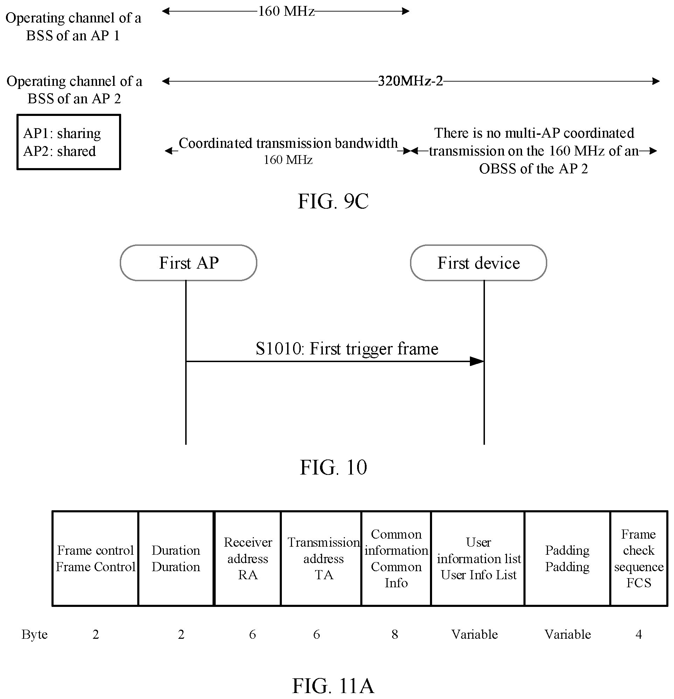

FIG. 9C is an example diagram of Case 3. As shown in FIG. 9C, an AP 1 is the sharing AP, and an AP 2 is the shared AP. An operating channel of a BSS of the AP 1 has a bandwidth of 160 MHz. An operating channel of a BSS of the AP 2 has a second bandwidth of 320 MHz (denoted as 320 MHz-2 in FIG. 9C). It may be seen from FIG. 9C that, a coordinated bandwidth used for performing multi-AP coordinated transmission by the AP 1 and the AP 2 is the 160-MHz bandwidth corresponding to the operating channel of the BSS of the AP 2. The remaining upper 160-MHz bandwidth of the BSS of the AP 2 cannot be used for the multi-AP coordinated transmission.

It may be learned from the foregoing content that, in some cases, a portion of the operating bandwidth of the sharing AP cannot be used for multi-AP coordinated transmission. For example, in a case in which the operating bandwidth of the shared AP is less than the operating bandwidth of the sharing AP, a portion of the operating bandwidth of the sharing AP other than the operating bandwidth of the shared AP cannot be used for multi-AP coordinated transmission. For example, for the scenario shown in FIG. 9B, the lower 160-MHz bandwidth of the AP 1 cannot be used for multi-AP coordinated transmission. In a related technology, how to handle the bandwidth that cannot be used for multi-AP coordinated transmission has not yet been specified.

FIG. 10 is a schematic flowchart of a wireless communication method according to an embodiment of this application, to resolve the foregoing problem. The method shown in FIG. 10 may be executed by a first AP and a first device.

The method illustrated in FIG. 10 may include step S1010.

In step S1010, the first AP transmits a first trigger frame to the first device.

The first device may include a second AP and/or a first STA. The first STA may be, for example, a non-AP STA associated with the first AP. In other words, a receiver of the first trigger frame may be an AP or a non-AP STA. During multi-AP coordinated transmission, the first AP may be a sharing AP, and the second AP may be a shared AP.

The first trigger frame may include first information and second information. The following describes each of the first information and the second information.

The first information may be used to instruct or trigger the second AP to perform multi-AP coordinated transmission on a first bandwidth. It may be understood that the first bandwidth may be a coordinated bandwidth. The second AP may perform multi-AP coordinated transmission on the coordinated bandwidth based on the first information.

It should be noted that, a type of the multi-AP coordinated transmission is not limited in this application. For example, a type of the multi-AP coordinated transmission may include: coordinated UL MU-MIMO, C-BF, C-SR, multi-AP joint transmission, C-TDMA, or the like. For another example, the type of the multi-AP coordinated transmission may be non-C-OFDMA.

The multi-AP coordinated transmission indicated by the first information may be performed by a plurality of APs. The plurality of APs include the second AP; and the plurality of APs may or may not include the first AP. For example, if the multi-AP coordinated transmission is performed by a plurality of shared APs, the first AP may not participate in the multi-AP coordinated transmission. For another example, if the multi-AP coordinated transmission is performed by the sharing AP and at least one shared AP, the first AP may participate in the multi-AP coordinated transmission.

The second information may be used to instruct or trigger the first STA to communicate with the first AP on a second bandwidth. In other words, the second information may be used to indicate that the first AP performs single-AP transmission with the first STA. Alternatively, in other words, the second information may be used to indicate a transmission bandwidth for performing single-AP transmission by the first AP. It may be understood that the single-AP transmission is in contrast to the multi-AP coordinated transmission. In other words, only one AP participates in single-AP transmission, or an AP participating in single-AP transmission is not required to exchange information with another AP. The second bandwidth may also be referred to as a non-coordinated bandwidth.

It should be noted that the first AP may perform single-AP transmission only with the first STA on the second bandwidth, or the first AP may perform single-AP transmission with a plurality of STAs on the second bandwidth. The plurality of STAs may include the first STA. For example, in a case that the first AP performs single-AP transmission only with the first STA on the second bandwidth, the first STA may perform communication by using the entire second bandwidth. For another example, in a case that the first AP performs single-AP transmission with the plurality of STAs on the second bandwidth, the first STA may perform communication by using a portion of the second bandwidth. For another example, in a case that the first AP performs single-AP transmission with the plurality of STAs on the second bandwidth, the first STA may perform communication by using the entire second bandwidth. The first STA may perform MU-MIMO communication with the first AP by using the entire second bandwidth.

The first bandwidth and the second bandwidth may belong to an operating bandwidth of the first AP. The first bandwidth and the second bandwidth may not overlap with each other. In some embodiments, the first bandwidth and the second bandwidth may constitute the operating bandwidth of the first AP. In other words, the first bandwidth and the second bandwidth may occupy the entire operating bandwidth of the first AP.

In some embodiments, the first bandwidth may be the operating bandwidth of the second AP. For example, in a case in which the operating bandwidth of the first AP is greater than the operating bandwidth of the second AP, the second bandwidth may be a remaining bandwidth within the operating bandwidth of the first AP other than the operating bandwidth of the second AP. Referring to FIG. 9B, the operating bandwidth of the first AP is 320 MHz. The operating bandwidth of the second AP is the upper 160 MHz of the 320 MHz bandwidth. A remaining bandwidth within the operating bandwidth of the first AP other than the operating bandwidth of the second AP is the lower 160 MHz. The first bandwidth may be the upper 160 MHz of the 320-MHz operating bandwidth of the first AP. The second bandwidth may be the lower 160 MHz of the 320-MHz operating bandwidth of the first AP.

According to this application, hybrid transmission of multi-AP coordinated transmission and single-AP transmission may be implemented on the operating bandwidth of the first AP. If a portion of the operating bandwidth of the first AP cannot be used for multi-AP coordinated transmission, the first AP may perform single-AP transmission with the first STA according to indication of the first trigger frame, thereby improving spectrum utilization efficiency. In addition, if requiring the operating bandwidth of the shared AP is the same as the operating bandwidth of the sharing AP so as to achieve higher spectrum utilization, this specific limitation is imposed on the operating bandwidth of the shared AP. According to this application, even when the operating bandwidth of the shared AP (that is, the second AP) is less than the operating bandwidth of the sharing AP, relatively high spectrum utilization can still be achieved in this application. Therefore, according to this application, limitations imposed on the operating bandwidth of the shared AP can be reduced, allowing a greater variety of shared APs to participate in multi-AP coordinated transmission. In addition, according to the indication of the second information, the remaining bandwidth of the multi-AP coordinated transmission may be used as the second bandwidth for single-AP transmission. Therefore, the remaining bandwidth is not idle, thereby avoiding a case in which the remaining bandwidth remains idle for too long and is preempted by another AP or STA.

It should be noted that the communication, between the first STA and the first AP, indicated by the second information may be in a first transmission mode. The first transmission mode may include one or more of the following: single-user transmission, MU-MIMO transmission, OFDMA transmission, or non-OFDMA (non-OFDMA) transmission. For example, the first transmission mode may be OFDMA MU-MIMO transmission or non-OFDMA MU-MIMO transmission.

It should be noted that if the first transmission mode includes OFDMA MU-MIMO transmission, the first STA and the first AP may communicate with each other on a portion of the second bandwidth. If the first transmission mode includes non-OFDMA MU-MIMO transmission, the first STA and the first AP may communicate with each other on the entire second bandwidth.

A format of the first trigger frame is described in detail below with reference to FIG. 11A to FIG. 11C.

FIG. 11A is an example diagram of a format of a trigger frame. The trigger frame may be the first trigger frame. As shown in FIG. 11A, the trigger frame may include one or more of the following fields: a frame control (frame control) field, a duration (duration) field, a receiver address (receiver address, RA) field, a transmission address (transmission address, TA) field, a common information (common info) field, a user information list (user info list) field, a padding (padding) field, or a frame check sequence (frame check sequence, FCS) field. The following describes the common information field, the user information list field, and the padding field.

### (1) Common information field

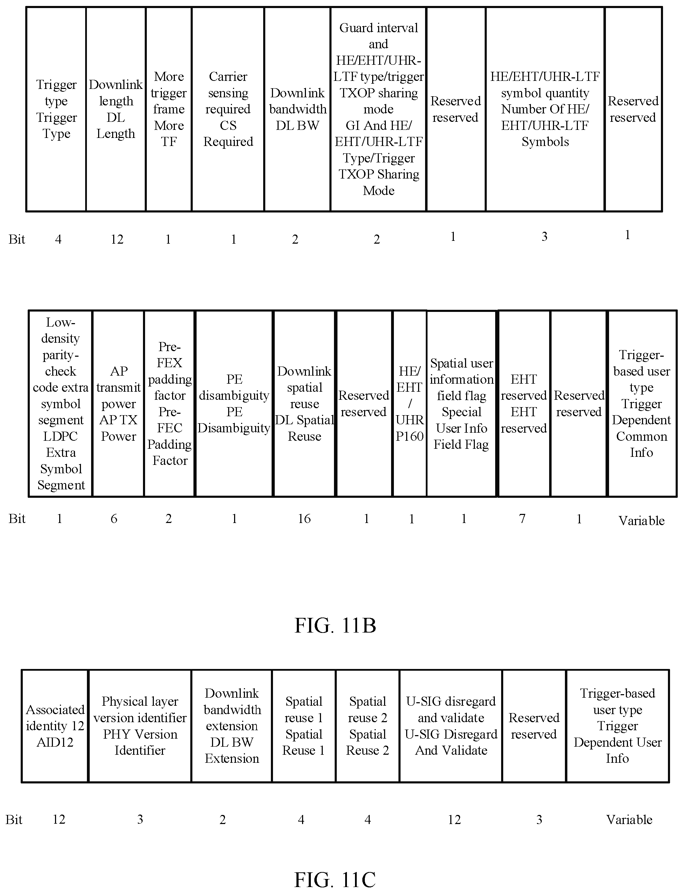

The common information field mainly carries common information. FIG. 11B is an example diagram of a format of the common information field.

As shown in FIG. 11B, the common information field may include one or more of the following fields: a trigger type (trigger type) field, a downlink length (DL length) field, a more trigger frame (more TF) field, a carrier sensing required (CS required) field, a downlink bandwidth (downlink bandwidth, DL BW) field, a guard period and HE/EHT/UHR-LTF type/trigger TXOP sharing mode (GI And HE/EHT/UHR-LTF type/trigger TXOP sharing mode) field, an HE/EHT/UHR-LTF symbol quantity (number of HE/EHT/UHR-LTF symbols) field, a low density parity check extra symbol segment (LDPC extra symbol segment) field, an AP transmit power (AP TX power) field, a Pre-FEX padding factor (Pre-FEC padding factor) field, a PE disambiguity (PE disambiguity) field, a downlink spatial reuse (DL spatial reuse) field, an HE/EHT/UHR P160 field, a spatial user information field flag (special user info field flag), an EHT reserved (EHT reserved) field, or a trigger-based user type (trigger dependent common info) field.

### (2) User information list field

The user information list field is composed of one or more user information fields (user info field). In some types of trigger frames (for example, UHR trigger frames), the user information list field includes one or more special user information fields (special user info field) and/or a plurality of variant user information fields (variant user info field). The variant user information field may be, for example, a UHR variant user information field. The following describes each of the special user information field and the variant user information field.

The special user information field may carry necessary universal signal field (universal signal field, U-SIG) subfields of a requested PPDU. The special user information field may be located after the common information field in a trigger frame. FIG. 11C is an example diagram of a format of a special user information field. As shown in FIG. 11C, the special user information field may include one or more of the following fields: an associated identity 12 (AID12) field, a physical layer version identifier (PHY version identifier) field, a downlink bandwidth extension (DL BW extension) field, a spatial reuse 1 (spatial reuse 1) field, a spatial reuse 2 (spatial reuse 2) field, a U-SIG disregard and validate (U-SIG disregard and validate) field, or a trigger-based user type field.

It should be noted that an AID12 subfield of each special user information field should be set to a different fixed value. The fixed value may be, for example, 2007 or 2008.

The variant user information field may carry information about STAs (including an AP and a non-AP STA) indicated by the AID12 subfield. It may be learned that the AID12 subfield in the variant user information field indicates content different from content indicated by the AID12 subfield in the special user information field.

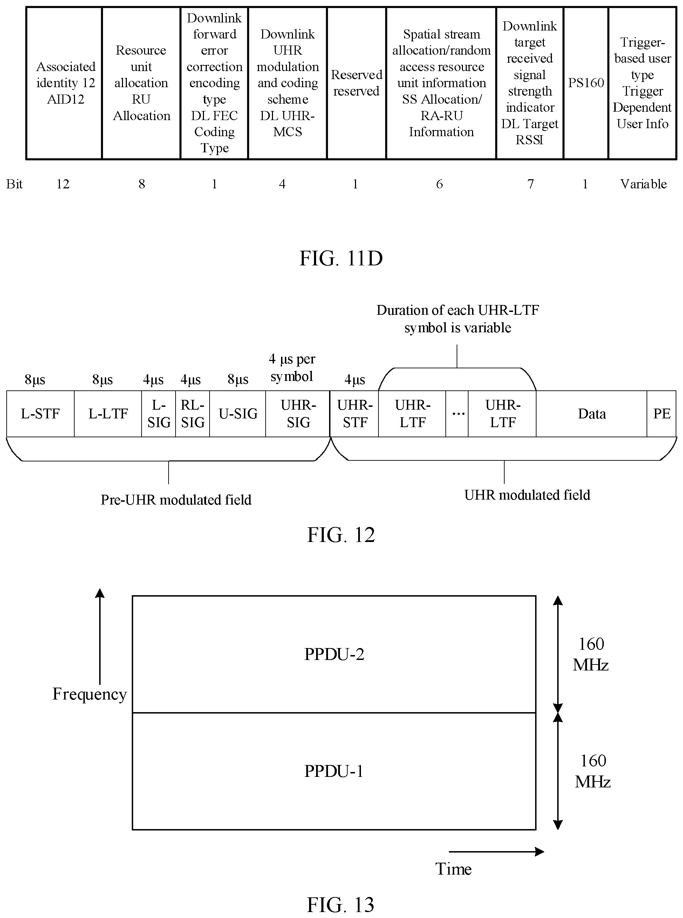

FIG. 11D is an example diagram of a format of the variant user information field. As shown in FIG. 11D, the variant user information field may include one or more of the following fields: an associated identity 12 (AID12) field, a resource unit allocation (RU allocation) field, a downlink forward error correction encoding type (DL FEC coding type) field, a downlink UHR modulation and coding scheme (DL UHR-MCS) field, a spatial stream allocation/random access resource unit information (SS allocation/RA-RU information) field, a downlink target received signal strength indicator (DL target RSSI) field, a PS160 field, or a trigger-based user type field.

### (3) Padding field

The padding field may appear in the trigger frame to extend a frame length of the trigger frame. The frame length extension is to provide a STA, that receives the trigger frame, with sufficient time to prepare a response PPDU, so that the STA transmits the response PPDU after a short interframe space (short interframe space, SIFS) following the reception of the trigger frame. A length of the padding field may be variable (variable). The length of the padding field is, for example, at least two bytes. The padding field may be set to all 1s.

In some embodiments, the first trigger frame may be a multi-AP trigger frame. Whether a type of the trigger frame is a multi-AP trigger frame may be indicated by a trigger type field in the trigger frame. For example, if a value of the trigger type field of the trigger frame is any value from 9 to 15 (for example, 9), the trigger frame may be a multi-AP trigger frame.

In a related technology, a multi-AP trigger frame is used only to trigger multi-AP coordinated transmission. However, in this application, the multi-AP trigger frame may further trigger single-AP transmission. In other words, a single multi-AP trigger frame may trigger both multi-AP coordinated transmission and single-AP transmission, thereby reducing a quantity of trigger frames to be transmitted and further saving communication resources.

In some embodiments, the first trigger frame may further include third information. The third information may be used to indicate a sum of the first bandwidth and the second bandwidth.

For example, the third information may be carried in the DL BW field of the common information field and the DL BW extension field of the special user information field. In other words, the DL BW field and the DL BW extension field jointly indicate the sum of the first bandwidth and the second bandwidth. The sum of the first bandwidth and the second bandwidth may also be represented as a sum of PPDU bandwidths for multi-AP coordinated transmission and single-AP transmission. Table 1 is an example in which the DL BW field and the DL BW extension field jointly indicate the sum of the first bandwidth and the second bandwidth.

**Table 1**

| DL BW field | DL BW extension field | PPDU bandwidth for coordinated transmission and transmission in the first transmission mode |
|---|---|---|
| 0 | 0 to 3 | Reserved |
| 1 | 0 | 40 MHz |
| | 1 to 3 | Reserved |
| 2 | 0 | 80 MHz |
| | 1 to 3 | Reserved |
| 3 | 0 | Reserved |
| | 1 | 160 MHz |
| | 2 | 320 MHz-1 |
| | 3 | 320 MHz-2 |

It should be noted that Table 1 is merely an example. Part of content in Table 1 may be implemented separately. For example, each row in Table 1 may be implemented separately. For another example, part of content in Table 1 may be deleted. For another example, Table 1 may further include other content.

In some embodiments, the first information or the second information may be carried in a first field. It may be understood that the first field may carry either the first information or the second information. For example, the first trigger frame may include a plurality of first fields. One of the plurality of first fields may carry the first information, and another of the plurality of first fields may carry the second information. In other words, some of the plurality of first fields may carry information related to single-AP transmission, and some of the first fields may carry information related to multi-AP coordinated transmission.

The first field may include a device identity field. The device identity field may, for example, indicate AID information. Based on the device identity field, whether the first field is used to indicate the first information or the second information may be determined.

For example, in a case in which a value of the device identity field is within a first interval, the first field may indicate the first information. Alternatively, in a case in which the value of the device identity field is within a second interval, the first field may indicate the second information. For example, the first interval may be an AP identity range, and the second interval may be an STA identity range (non-AP STA). Optionally, the first interval may be, for example, 1 to 2007. The second interval may be, for example, 2008 to N. N may be a value greater than 2008, and N may be a value less than or equal to 2044. N may be predefined, pre-configured, or configurable.

For another example, in a case in which the device identity field indicates an identity of the second AP, the first field may indicate the first information. Alternatively, in a case in which the device identity field indicates an identity of the first STA, the first field may indicate the second information.

In some embodiments, the first field may include the variant user information field or the user information field described above. The device identity field may include the AID12 field in the variant user information field. Table 2 shows correspondences between ranges of values of AID12 and information indicated.

**Table 2**

| AID12 field | Description |
|---|---|
| 0 | Indicates that the user information field indicates one or more consecutive RA-RUs allocated to an associated STA. |
| 1-2007 | Indicates that an address in the user information field points to an associated non-AP STA, and an AID of the non-AP STA equals the AID12 field. |
| **2008-*N*** | **Indicates that an address in the user information field points to a shared AP, and an APID of the shared AP equals the AID12 field.** |
| ***N*-2044** | **Reserved** |
| 2045 | Indicates that the user information field indicates one or more consecutive RA-RUs allocated to an associated STA. |
| 2046 | Indicates unallocated RUs |
| 2047-4094 | Reserved |
| 4095 | It is not allowed to be in the user information field because it indicates the start of the padding field. |

In a related technology, values ranging from 2008 to 2044 of the AID12 field are reserved. Reserved values of AID12 are used in Table 2, to indicate that the corresponding user information field points to a shared AP, thereby indicating that the user information field is used to indicate multi-AP coordinated transmission.

In some embodiments, the first information may include information about the first bandwidth, and the second information may include information about the second bandwidth. The information about the first bandwidth may include information about a resource unit (resource unit, RU) or a multiple resource unit (multiple resource unit, MRU) corresponding to the first bandwidth. The RU or MRU corresponding to the first bandwidth may be used by each shared AP for performing coordinated transmission in multi-AP coordinated transmission. The information about the second bandwidth may include information about the RU or MRU corresponding to the second bandwidth. The RU or MRU corresponding to the second bandwidth may be used by the first AP for performing single-AP transmission. The information about the RU or MRU may include one or more of the following: an RU or MRU size (RU or MRU size), an RU or MRU index (RU or MRU index), a physical layer RU or MRU index (PHY RU or MRU index).

The information about the first bandwidth or information about the second bandwidth may be carried in one or more of the following fields: a resource unit allocation field of a variant user information field, a PS160 field of a variant user information field, a downlink bandwidth field of a common information field, or a downlink bandwidth extension field of a special user information field. For correspondences between RUs or MRU and the resource unit allocation field of the variant user information field, the PS160 field of the variant user information field, the downlink bandwidth field of the common information field, as well as the downlink bandwidth extension field of the special user information field, reference may be made to Table 9-45l in EEE 802.11 be Draft 4.0 for descriptions of bandwidths of 40 MHz, 80 MHz, 160 MHz, and 320 MHz. Values corresponding to small-sized RUs or MRUs in Table 9-45l may be set to reserved. It should be noted that, in this application, only part of content in Table 9-45l may be used, or new content may be added to Table 9-451 or part of content in Table 9-45l may be modified.

In some embodiments, if a device identified by the AID12 field of the variant user information field is an AP, a corresponding RU or a corresponding MRU is used for multi-AP coordinated transmission.

In some embodiments, if the device identified by the AID12 field of the variant user information field is a non-AP STA, a corresponding RU or a corresponding MRU is used for single-AP transmission.

In some embodiments, the first STA may be required to switch its operating channel. For example, if the operating bandwidth of the first STA is less than the sum of the first bandwidth and the second bandwidth, the first STA may switch its operating channel to a channel corresponding to the second bandwidth. For another example, if the operating bandwidth of the first STA is equal to the sum of the first bandwidth and the second bandwidth, the first STA may not switch its operating channel, and may only receive and decode information on the channel corresponding to the second bandwidth, while not receiving or decoding (or ignoring) information on a channel other than the channel corresponding to the second bandwidth.

In some embodiments, the first STA may transmit fourth information to the first AP. The fourth information may be used to indicate first duration. The first duration may be time required by the first STA to switch an operating channel to the second bandwidth. In other words, the first duration may be a switching delay for the first STA to switch to the second bandwidth.

The first AP may determine the first duration based on the first information, and accordingly adjust the length of the first trigger frame based on the first duration, so as to provide the first STA with sufficient time to switch to the second bandwidth. For example, the first AP may pad the first trigger frame based on the first duration to extend duration of the first trigger frame. The padding may be, for example, medium access control (medium access control, MAC) frame padding.

In some embodiments, the fourth information may be carried in a capability element (capabilities element). The capability element may be, for example, a UHR capability element. The capability element may exist in the following frame: a probe request frame (probe request frame), an association request frame (association request frame), or a reassociation request frame (reassociation request frame).

In some embodiments, the first STA may transmit the fourth information when establishing an association with the first AP.

Optionally, the capability element may include a field indicating the fourth information. The field may be, for example, a newly added field in the capability element. The newly added field may be, for example, referred to as a channel switch delay (channel switch delay) field. For example, an encoded value of the channel switch delay field may correspond to the first duration or an interval to which the first duration belongs. For example, an encoded value 0 of the channel switch delay field may indicate that the first duration is 0 µs. For another example, an encoded value 1 of the channel switch delay field may indicate that first duration is 32 µs or that the interval to which the first duration belongs is 0 µs to 32 µs. For another example, an encoded value 2 of the channel switch delay field may indicate that first duration is 64 µs or that the interval to which the first duration belongs is 32 µs to 64 µs.

It should be noted that, for a non-AP STA, the channel switch delay may be encoded as described above. For an AP, the channel switch delay field may be set to a reserved value. This is because the AP is not required to perform channel switching.

Table 3 shows an example of a definition and encoded values of the channel switch delay field.

**Table 3**

| Field | Definition | Encoded value |
|---|---|---|
| Channel switch delay | Indicates a channel switch delay, and is used to determine MAC padding duration for a trigger frame. | For a non-AP STA: |
| | | when set to 0, it indicates 0 µs; |
| | | when set to 1, it indicates 32 µs; |
| | | when set to 2, it indicates 64 µs; |
| | | and |
| | | a value 3 is reserved. |
| | | For an AP: set to reserved. |

It should be noted that the "channel switch delay field" is merely an example of a name for the field indicating the fourth information. In other words, another field name may be used for the field indicating the fourth information.

As described above, the first AP may pad the first trigger frame based on the first duration. The following describes a padding method in detail.

In some embodiments, the first trigger frame may indicate that one STA (that is, the first STA) communicates with the first AP on the second bandwidth, or may indicate that the first AP communicates only with the first STA on the second bandwidth. It may be understood that, in this case, the first trigger frame may include a user information field indicating a non-AP STA. In such a case, the first AP may pad the first trigger frame based on the first duration indicated by the first STA. For example, padding duration for the first AP may be greater than or equal to the first duration.

In some embodiments, the first trigger frame may indicates that a plurality of STAs communicate with the first AP on the second bandwidth, or may indicate that the first AP perform single-AP transmission with a plurality of STAs on the second bandwidth. The plurality of STAs include the first STA. It may be understood that, in this case, the first trigger frame may include a plurality of user information fields indicating a plurality of non-AP STAs. In this case, the first AP may pad the first trigger frame based on second duration. The second duration may be related to the first duration. For example, padding duration for the first AP may be greater than or equal to the second duration.

For example, the second duration may be a maximum value of time required for a plurality of STAs to switch their respective operating channels to the second bandwidth. For example, the second duration may be a maximum value of durations indicated by channel switch delay fields carried by a plurality of STAs.

After a frame exchange sequence (sequence) between the first STA and the first AP is completed on a second channel, the first STA may switch its operating channel back to an original operating channel within the first duration. In other words, the first STA may switch its operating channel back to the primary (primary) channel. Depending on different types of transmission performed between the first STA and the first AP, the frame exchange sequence may vary. For example, if C-TDMA transmission is performed, a frame exchange sequence after the first trigger frame may include a plurality of sets of PPDU and BA exchanges. For another example, if coordinated UL MU-MIMO, C-BF, C-SR, or joint transmission is performed, a frame exchange sequence after the first trigger frame may include only one set of PPDU and BA exchange. This is because, each PPDU transmission of these transmission types requires synchronization via a trigger frame.

It should be noted that, in this application, a type of PPDU used by the first AP for performing multi-AP coordinated communication or single-AP communication is not limited. For example, a first PPDU used for communication performed by the first AP may be a UHR PPDU. The UHR MU PPDU is described below with reference to FIG. 12 by using an example.

A UHR MU PPDU format shown in FIG. 12 is used for transmission to one or more users. The UHR MU PPDU may include a legacy short training field (legacy short training field, L-STF), a legacy long training field (legacy long training field, L-LTF), a legacy signal (legacy signal, L-SIG) field, a repeated legacy signal (repeaed L-SIG, RL-SIG) field, a U-SIG field, a UHR-SIG field, a UHR-STF field, a UHR-LTF field, a data field, and a PE field. In the UHR MU PPDU, the L-STF, L-LTF, L-SIG field, RL-SIG field, U-SIG field, and UHR-SIG field may be referred to as pre-UHR modulated fields (Pre-UHR modulated fields), while the UHR-STF field, the UHR-LTF field, the data field, and the PE field may be referred to as UHR modulated fields (UHR modulated fields). For a UHR PPDU, each UHR-LTF symbol and each data symbol have the same GI duration, which is 0.8 µs, 1.6 µs, or 3.2 µs. The UHR-LTF field includes three types: 1x UHR-LTF, 2x UHR-LTF, and 4x UHR-LTF. Duration of each 1x UHR-LTF, 2x UHR-LTF, or 4x UHR-LTF symbol without GI is 3.2 µs, 6.4 µs, or 12.8 µs. Duration of a data symbol without GI is 12.8 µs.

As mentioned above, the first AP may participate in multi-AP coordinated transmission or may not participate in multi-AP coordinated transmission. In a case in which the first AP participates in multi-AP coordinated transmission, a first PPDU is still required to be transmitted to the first STA through single-AP transmission on the second bandwidth within the operating bandwidth of the first AP, and the first AP is required to perform coordinated transmission of a second PPDU with other APs on the first bandwidth.

It should be noted that PPDU formats of the first PPDU and the second PPDU may be identical or different, which is not limited in this application. For example, the first PPDU may be an HE PPDU, an EHT PPDU, a UHR PPDU, or the like. The second PPDU may be an HE PPDU, an EHT PPDU, a UHR PPDU, or another PPDU format the same as or different from the first PPDU.

It should be noted that lengths (that is, duration) of the first PPDU and the second PPDU may be identical. After completing a PPDU and BA frame transmission, the first AP can trigger a next multi-AP coordinated transmission at the same time.

In some embodiments, the first AP may transmit the first PPDU and the second PPDU by using an FA-PPDU.

For ease of understanding, the FA-PPDU technique is described below.

Based on the FA-PPDU, throughput of a BSS (for example, an EHT BSS) with a large bandwidth (for example, 320 MHz) may be increased as much as possible. One FA-PPDU may be composed of a plurality of PPDUs. The plurality of PPDUs occupy one or more non-overlapping frequency-domain bandwidths. Each PPDU achieves orthogonality in frequency domain on a per-symbol basis. It should be noted that, each PPDU may have a same or different PPDU format, such as an HE PPDU, an EHT PPDU, or the like.

FIG. 13 is an example diagram of an FA-PPDU. As shown in FIG. 13, the FA-PPDU may occupy a 320-MHz frequency-domain bandwidth. The FA-PPDU may include a PPDU-1 and a PPDU-2. The PPDU-1 and the PPDU-2 occupy two non-overlapping 80-MHz frequency-domain bandwidths, respectively.

It should be noted that, the second information may be transmitted not only via the first trigger frame, but also via target wake time (target wake time, TWT). In other words, an operating bandwidth to which the first STA switches may be indicated not only via the first trigger frame, but also via a TWT mechanism. For example, before transmissions between the first AP and the first STA, a request-response negotiation may be performed once, such that the first STA switches its bandwidth to a non-coordinated bandwidth.

This application is described in detail below with reference to Embodiment 1 to Embodiment 3.

### Embodiment 1

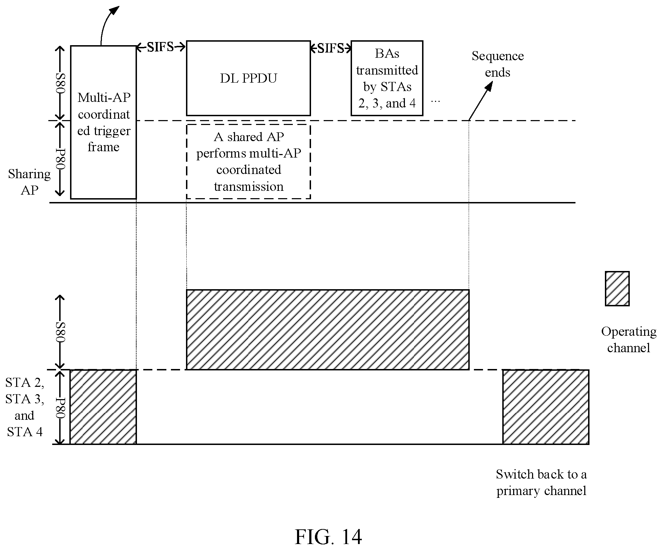

FIG. 14 is an example diagram of a transmission process according to Embodiment 1.

In Embodiment 1, a sharing AP is a first AP. A STA 2, a STA 3, and a STA 4 are all STAs associated with the first AP. Any one of the STA 2, the STA 3, or the STA 4 may be a first STA. AIDs associated with the STA 2, the STA 3, and the STA 4 are respectively 2, 3, and 4, and their operating bandwidths are 80 MHz.

The sharing AP contends for and obtains a 160-MHz channel, where a 80-MHz primary (primary) channel (P80) is used for multi-AP coordinated transmission, and a 80-MHz secondary (secondary) channel (S80) is used for single-AP transmission in the first transmission mode.

The sharing AP indicates, in a multi-AP trigger frame, related information of an associated non-AP STA participating in single-AP transmission in the first transmission mode. The sharing AP sets values of fields in the multi-AP trigger frame as follows.

A DL BW field in a common information field is set to 11, and a downlink bandwidth extension field in a special user information field is set to 01, so as to indicate that a bandwidth for a PPDU to be transmitted next is 160 MHz.

The multi-AP trigger frame may include three UHR variant user information fields, to respectively correspond to the STA 2, the STA 3, and the STA 4, thereby indicating that the sharing AP is to perform single-AP transmission in the first transmission mode with the STA 2, the STA 3, and the STA 4. Settings of the three UHR variant user information fields are as follows.

First UHR variant user information field: An AID 12 field is set to 2, an RU allocation field is set to 11000011, a PS160 field is set to 0, and remaining fields are set to reserved. The first UHR variant user information field indicates that an RU or MRU for a non-AP STA 1 to participate in single-AP transmission in the first transmission mode is S80.

Second UHR variant user information field: An AID 12 field is set to 3, an RU allocation field is set to 11000011, a PS160 field is set to 0, and remaining fields are set to reserved. The second UHR variant user information field indicates that an RU or MRU for a non-AP STA 2 to participate in single-AP transmission in the first transmission mode is S80.

Third UHR variant user information field: An AID 12 field is set to 4, an RU allocation field is set to 11000011, a PS160 field is set to 0, and remaining fields are set to reserved. The second UHR variant user information field indicates that an RU or MRU for a non-AP STA 3 to participate in single-AP transmission in the first transmission mode is S80.

The sharing AP is further required to perform MAC frame padding on the multi-AP trigger frame. Non-AP STAs 2, 3, and 4 indicate, in respective UHR Capabilities elements of their transmitted Probe Request frame, Association Request frame, or Reassociation Request frame, that ChannelSwitchDelay fields are respectively 32us, 32us, and 64us. Therefore, duration for MAC frame padding of the multi-AP trigger frame is 64 µs.

The non-AP STAs 2, 3, and 4 parse user information fields matching their respective AIDs to obtain that an RU or MRU for single-AP transmission in the first transmission mode is S80. Based on this, the non-AP STAs 2, 3, and 4 switch their respective operating channels to S80, and after the frame exchange sequence ends, switch their respective operating channels back to the primary channels.

The sharing AP indicates, in the multi-AP trigger frame, related information of a shared AP participating in multi-AP coordinated transmission.

When performing multi-AP coordinated transmission and single-AP transmission in the first transmission mode, there are the following two possibilities: (1) the sharing AP participates in both multi-AP coordinated transmission and single-AP transmission in the first transmission mode, and one or more shared APs participate in multi-AP coordinated transmission; and (2) the sharing AP only participates in single-AP transmission in the first transmission mode, and a plurality of shared APs participate in multi-AP coordinated transmission. The possibility (1) is described below with reference to Embodiment 2, and the possibility (2) is described below with reference to Embodiment 3.

### Embodiment 2

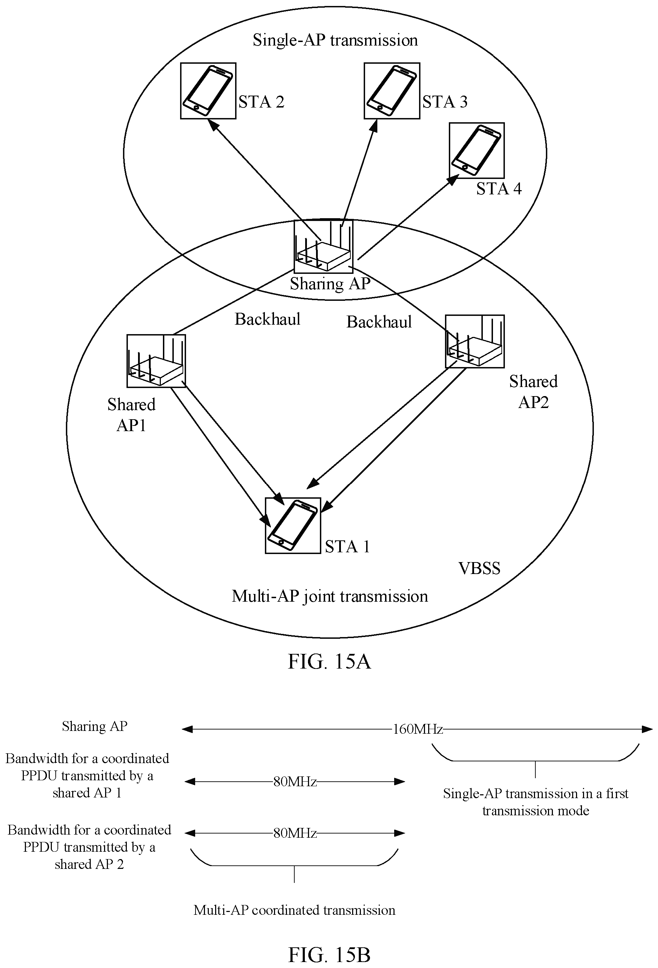

FIG. 15A is an example diagram of a scenario to which Embodiment 2 is applicable. In FIG. 15A, a sharing AP may be a first AP, a shared AP 1 or a shared AP 2 may be a second AP, and a STA 2, a STA 3, or a STA 4 may be a first STA.

As shown in FIG. 15A, the sharing AP, the shared AP 1, and the shared AP 2 constitute a multi-coordinated set (may also be referred to as a virtual BSS (virtual BSS, VBSS)). A service target of the multi-coordinated set is the STA 1. The sharing AP and its associated non-AP STAs 2, 3, and 4 constitute a single-AP BSS.

As shown in FIG. 15B, since operating bandwidths of the shared AP 1 and the shared AP 2 are 80 MHz, which overlap with the lower 80 MHz of the sharing AP, the sharing AP makes the lower 80 MHz be used for multi-AP coordinated transmission, that is, the lower 80 MHz is the first bandwidth. In addition, the sharing AP does not participate in coordinated transmission. The upper 80 MHz is used for single-AP transmission in the first transmission mode, that is, the upper 80 MHz is the second bandwidth. In this case, the lower 80 MHz also serves as the primary channel (since all APs exchange control signalling on the primary channel, an overlapping portion is required to include the primary channel of each AP).

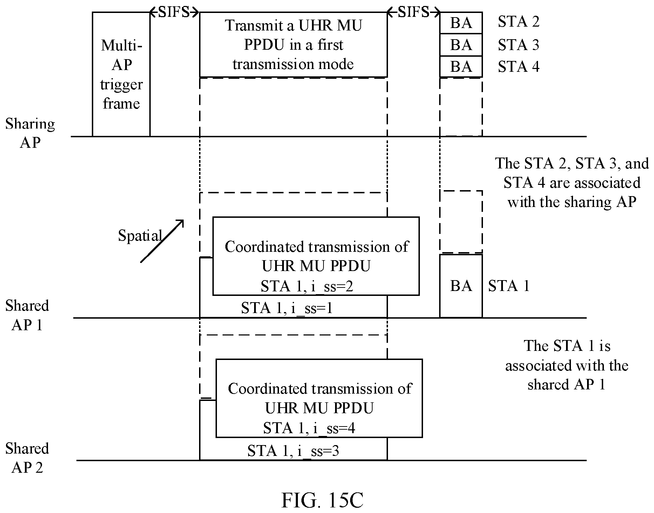

As shown in FIG. 15C, when hybrid transmission is performed, the sharing AP first transmits a multi-AP trigger frame, to indicate that a bandwidth for a PPDU to be transmitted next is 160 MHz, and a type of multi-AP coordinated transmission is joint transmission. RUs or MRUs in User Info fields of the shared AP 1 and the shared AP 2 identified by the AID 12 field are indicated as the primary 80 MHz, and RUs or MRUs in User Info fields of the STAs 2, 3, and 4 identified by the AID 12 field are indicated as the secondary 80 MHz.

As shown in FIG. 15C, the shared AP 1 and the shared AP 2 perform joint transmission of a UHR MU PPDU to the STA 1 on the primary 80 MHz, where the shared AP 1 performs the joint transmission via spatial streams i_ss = 1 and i_ss = 2, and the shared AP 2 performs the joint transmission via spatial streams i_ss = 3 and i_ss = 4. The sharing AP transmits a UHR MU PPDU in the first transmission mode to its associated STAs 2, 3, and 4 on the secondary 80 MHz.

The STA 1 receives the UHR PPDU transmitted via the joint transmission by the shared AP 1 and the shared AP 2, and after successfully decoding the UHR PPDU, replies to its associated AP with a BA frame after a SIFS interval. The STAs 2, 3, and 4 switch their respective operating bandwidths to the secondary 80 MHz, receive the UHR PPDU transmitted in the first transmission mode by the sharing AP, and after successfully decoding the UHR PPDU, reply with a BA frame after a SIFS interval.

### Embodiment 3

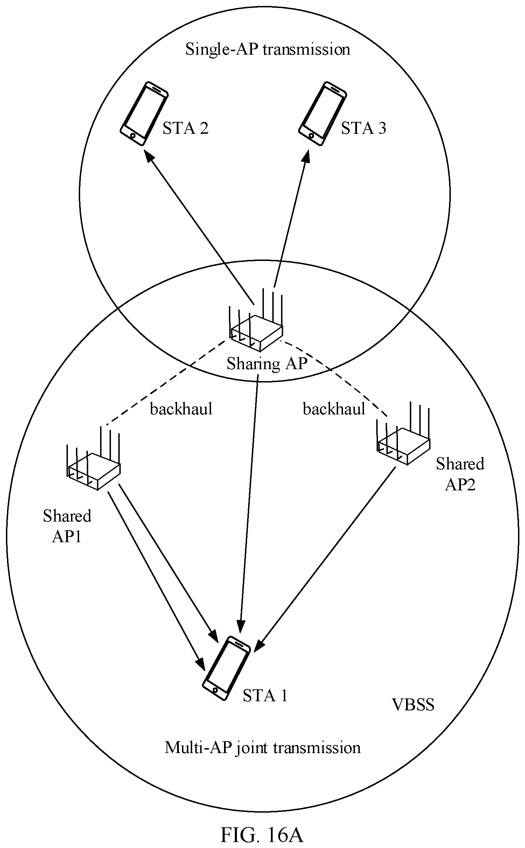

FIG. 16A is an example diagram of a scenario to which Embodiment 3 is applicable. In FIG. 16A, a sharing AP may be a first AP, a shared AP 1 or a shared AP 2 may be a second AP, and a STA 2 or a STA 3 may be a first STA.

As shown in FIG. 16A, the sharing AP, the shared AP 1, and the shared AP 2 constitute a multi-AP coordinated set (may also be referred to as a VBSS), with the STA 1 as a service target. The sharing AP and its associated non-AP STAs 2 and 3 constitute a single-AP BSS.

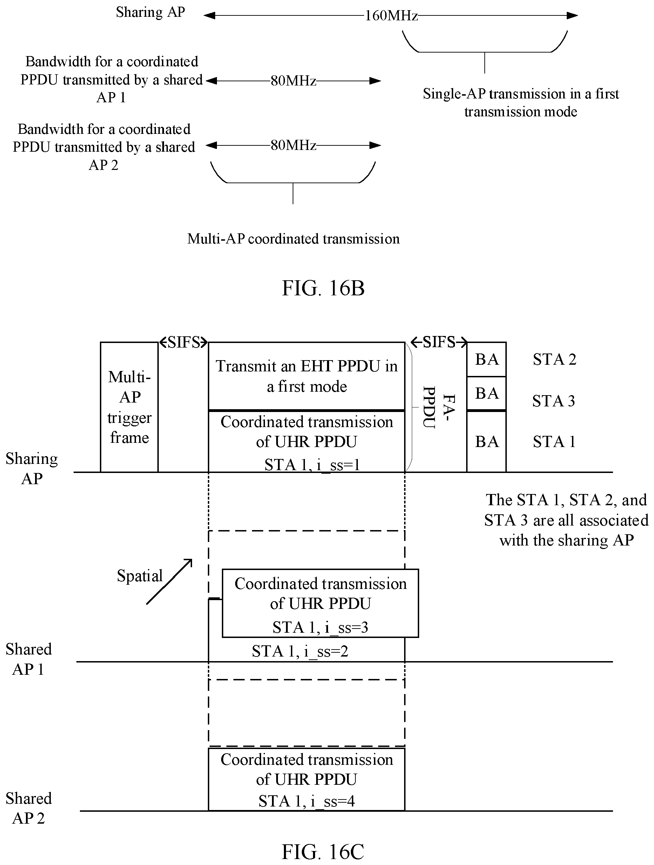

As shown in FIG. 16B, since operating bandwidths of the shared AP 1 and the shared AP 2 are 80 MHz, which overlap with the lower 80 MHz of the sharing AP, the sharing AP make the lower 80 MHz be used for multi-AP coordinated transmission, that is, the lower 80 MHz is the first bandwidth. In addition, the sharing AP participates in coordinated transmission. The upper 80 MHz is used for single-AP transmission in the first transmission mode, that is, the upper 80 MHz is the second bandwidth. In this case, the lower 80 MHz also serves as the primary channel.

As shown in FIG. 16C, when hybrid transmission is performed, the sharing AP first transmits a multi-AP trigger frame, to indicate that a bandwidth for a PPDU to be transmitted next is 160 MHz, and a type of multi-AP coordinated transmission is joint transmission. RUs or MRUs in User Info fields of the shared AP 1 and the shared AP 2 identified by the AID 12 field are indicated as the primary 80 MHz, and RUs or MRUs in User Info fields of the STAs 2 and 3 identified by the AID 12 field are indicated as the secondary 80 MHz.

As shown in FIG. 16C, the sharing AP, the shared AP 1, and the shared AP 2 perform coordinated transmission of a UHR MU PPDU to the STA 1 on the primary 80 MHz, where the sharing AP performs the coordinated transmission via a spatial stream i_ss = 1, the shared AP 1 performs the coordinated transmission via spatial streams i_ss = 2 and i_ss = 3, and the shared AP 2 performs the coordinated transmission via a spatial stream i_ss = 4. The sharing AP transmits an EHT MU PPDU to its associated STAs 2 and 3 on the secondary 80 MHz. The EHT MU PPDU and the UHR MU PPDU transmitted by the sharing AP constitute a frequency aggregated FA-PPDU, which may allow the FA-PPDU to achieve orthogonal alignment at an OFDM symbol level.

The STA 1 receives the UHR MU PPDU transmitted via joint transmission by the sharing AP, the shared AP 1, and the shared AP 2, and after successfully decoding the UHR MU PPDU, replies to its associated AP with a BA frame after a SIFS interval. The STAs 2 and 3 switch their respective operating bandwidths to the secondary 80 MHz, receive the EHT MU PPDU transmitted in the first transmission mode by the sharing AP, and after successfully decoding the EHT MU PPDU, reply with a BA frame after a SIFS interval.

The foregoing describes the method embodiments of this application in detail. The following describes apparatus embodiments of this application in detail. It should be understood that the descriptions of the method embodiments correspond to descriptions of the apparatus embodiments, and therefore, for parts that are not described in detail, reference may be made to the foregoing method embodiments.

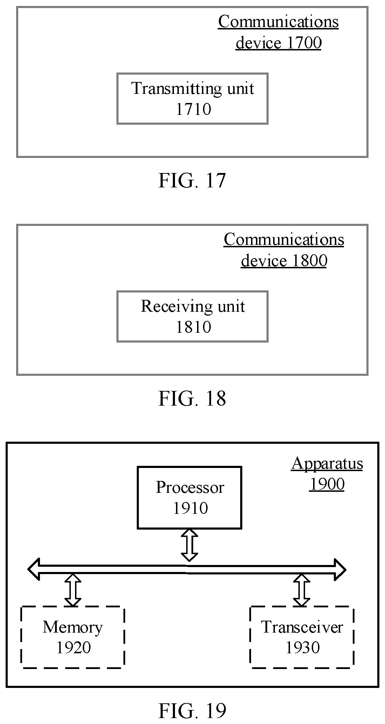

FIG. 17 is a schematic structural diagram of a communications device 1700 according to an embodiment of this application. The communications device 1700 is a first AP. The communications device 1700 may include a transmitting unit 1710. The transmitting unit 1710 is configured to transmit a first trigger frame, where the first trigger frame includes first information and second information, the first information is used to instruct a second AP to perform multi-AP coordinated transmission on a first bandwidth, the second information is used to instruct a first STA to communicate with the first AP on a second bandwidth, and both the first bandwidth and the second bandwidth belong to an operating bandwidth of the first AP.

In some embodiments, the first trigger frame is a multi-AP trigger frame.

In some embodiments, the first trigger frame further includes third information, and the third information is used to indicate a sum of the first bandwidth and the second bandwidth.

In some embodiments, the third information is carried in a downlink bandwidth field of a common information field and a downlink bandwidth extension field of a special user information field.

In some embodiments, the first information or the second information is carried in a first field, and the first field includes a device identity field; and in a case in which a value of the device identity field belongs to an AP identity range, the first field carries the first information; or in a case in which the value of the device identity field belongs to an STA identity range, the first field carries the second information.

In some embodiments, the first field includes a variant user information field, and the device identity field includes an AID12 field.

In some embodiments, information about the first bandwidth or information about the second bandwidth is carried in one or more of the following fields: a resource unit allocation field of a variant user information field, a PS160 field of a variant user information field, a downlink bandwidth field of a common information field, or a downlink bandwidth extension field of a special user information field.

In some embodiments, the information about the first bandwidth includes an RU or MRUs corresponding to the first bandwidth; and the information about the second bandwidth includes an RU or MRUs corresponding to the second bandwidth.

In some embodiments, the communications device 1700 is further configured to receive fourth information. The fourth information is used to indicate first duration, and the first duration is time required by the first STA to switch an operating channel to the second bandwidth.

In some embodiments, the fourth information is carried in a capability element.

In some embodiments, the communications device 1700 is further configured to pad the first trigger frame based on the first duration.

In some embodiments, the first STA is one of a plurality of STAs, and in a case in which the first AP communicates with the plurality of STAs on the second bandwidth, the padding, by the first AP, the first trigger frame based on the first duration includes: padding, by the first AP, the first trigger frame based on second duration, where the second duration is determined based on time required by the plurality of STAs to switch operating channels to the second bandwidth.

In some embodiments, the second duration is a maximum value of time required by the plurality of STAs to switch operating channels to the second bandwidth.

In some embodiments, communication between the first STA and the first AP is in a first transmission mode, and the first transmission mode includes one or more of the following: single-user transmission, multi-user multiple-input multiple-output transmission, orthogonal frequency division multiple access transmission, or non-orthogonal frequency division multiple access transmission.

In an optional embodiment, the transmitting unit 1710 may be a transceiver 1930. The communications device 1700 may further include a processor 1910 and a memory 1920, which are specifically shown in FIG. 19.

FIG. 18 is a schematic diagram of a structure of a communications device 1800 according to an embodiment of this application. The communications device 1800 may be a first device. The communications device 1800 may include a receiving unit 1810.

The receiving unit 1810 is configured to receive a first trigger frame transmitted by a first access point AP. The first device includes a second AP and/or a first STA, the first trigger frame includes first information and second information, the first information is used to instruct a second AP to perform multi-AP coordinated transmission on a first bandwidth, the second information is used to instruct a first STA to communicate with the first AP on a second bandwidth, and both the first bandwidth and the second bandwidth belong to an operating bandwidth of the first AP.

In some embodiments, the first trigger frame is a multi-AP trigger frame.

In some embodiments, the first trigger frame further includes third information, and the third information is used to indicate a sum of the first bandwidth and the second bandwidth.

In some embodiments, the third information is carried in a downlink bandwidth field of a common information field and a downlink bandwidth extension field of a special user information field.

In some embodiments, the first information or the second information is carried in a first field, and the first field includes a device identity field; and in a case in which a value of the device identity field belongs to an AP identity range, the first field carries the first information; or in a case in which the value of the device identity field belongs to an STA identity range, the first field carries the second information.

In some embodiments, the first field includes a variant user information field, and the device identity field includes an AID12 field.

In some embodiments, information about the first bandwidth or information about the second bandwidth is carried in one or more of the following fields: a resource unit allocation field of a variant user information field, a PS160 field of a variant user information field, a downlink bandwidth field of a common information field, or a downlink bandwidth extension field of a special user information field.

In some embodiments, the information about the first bandwidth includes an RU or MRUs corresponding to the first bandwidth; and the information about the second bandwidth includes an RU or MRUs corresponding to the second bandwidth.

In some embodiments, the first device includes a first STA, and the communications device is further configured to transmit fourth information to the first AP. The fourth information is used to indicate first duration, and the first duration is time required by the first STA to switch an operating channel to the second bandwidth.

In some embodiments, the fourth information is carried in a capability element.

In some embodiments, the communications device is further configured to switch an operating channel to the second bandwidth.

In some embodiments, the communications device 1800 is further configured to switch the operating channel back to a primary channel of the first STA in response to an end of a frame interaction sequence between the first STA and the first AP.

In some embodiments, communication between the first STA and the first AP is in a first transmission mode, and the first transmission mode includes one or more of the following: single-user transmission, multi-user multiple-input multiple-output transmission, orthogonal frequency division multiple access transmission, or non-orthogonal frequency division multiple access transmission.

In an optional embodiment, the receiving unit 1810 may be a transceiver 1930. The communications device 1800 may further include a processor 1910 and a memory 1920, which are specifically shown in FIG. 19.

FIG. 19 is a schematic structural diagram of an apparatus for communication according to an embodiment of this application. Dashed lines in FIG. 19 indicate that a unit or module is optional. The apparatus 1900 may be configured to implement the methods described in the foregoing method embodiments. The apparatus 1900 may be a chip, a terminal device, or a network device.

The apparatus 1900 may include one or more processors 1910. The processor 1910 may support the apparatus 1900 in implementing the methods described in the foregoing method embodiments. The processor 1910 may be a general-purpose processor or a dedicated processor. For example, the processor may be a central processing unit (central processing unit, CPU). Alternatively, the processor may be another general-purpose processor, a digital signal processor (digital signal processor, DSP), an application-specific integrated circuit (application specific integrated circuit, ASIC), a field-programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

The apparatus 1900 may further include one or more memories 1920. The memory 1920 stores a program, where the program may be executed by the processor 1910, to cause the processor 1910 to execute the methods described in the method embodiments. The memory 1920 may be independent of the processor 1910 or may be integrated into the processor 1910.

The apparatus 1900 may further include a transceiver 1930. The processor 1910 may communicate with another device or chip by using the transceiver 1930. For example, the processor 1910 may transmit data to and receive data from another device or chip through the transceiver 1930.

An embodiment of this application further provides a computer-readable storage medium for storing a program. The computer-readable storage medium may be applied to a terminal or a network device provided in embodiments of this application, and the program causes a computer to execute the methods executed by the terminal or the network device in various embodiments of this application.

An embodiment of this application further provides a computer program product. The computer program product includes a program. The computer program product may be applied to a terminal or a network device provided in embodiments of this application, and the program causes a computer to execute the methods executed by the terminal or the network device in various embodiments of this application.

An embodiment of this application further provides a computer program. The computer program may be applied to a terminal or a network device provided in embodiments of this application, and the computer program causes a computer to execute the methods executed by the terminal or the network device in various embodiments of this application.

It should be understood that the terms "system" and "network" in this application may be used interchangeably. In addition, the terms used in this application are used only to illustrate specific embodiments of this application, but are not intended to limit this application. The terms "first", "second", "third", "fourth", and the like in the specification, claims, and drawings of this application are used to distinguish between different objects, rather than to describe a specific order. In addition, the terms "include" and "have" and any variations thereof are intended to cover a non-exclusive inclusion.

In embodiments of this application, "indication" mentioned herein may refer to a direct indication, or may refer to an indirect indication, or may mean that there is an association relationship. For example, if A indicates B, it may mean that A directly indicates B, for example, B may be obtained from A. Alternatively, it may mean that A indicates B indirectly, for example, A indicates C, and B may be obtained from C. Alternatively, it may mean that there is an association relationship between A and B.

In embodiments of this application, "B corresponding to A" means that B is associated with A, and B may be determined based on A. However, it should be further understood that, determining B based on A does not mean determining B based only on A, but instead, B may be determined based on A and/or other information.

In embodiments of this application, the term "correspond" may mean that there is a direct or indirect correspondence between the two, or may mean that there is an association relationship between the two, or may mean that there is a relationship such as indicating and being indicated, or configuring and being configured.

In embodiments of this application, the term "and/or" is merely an association relationship that describes associated objects, and represents that there may be three relationships. For example, A and/or B may represent three cases: only A exists, both A and B exist, and only B exists. In addition, the character "/" in this specification generally indicates an "or" relationship between the associated objects.

In embodiments of this application, the "include" may refer to direct inclusion, or may refer to indirect inclusion. Optionally, the term "include" mentioned in embodiments of this application may be replaced with "indicate" or "be used to determine". For example, A including B may be replaced with that A indicates B, or A is used to determine B.

In embodiments of this application, sequence numbers of the foregoing processes do not mean execution sequences. The execution sequences of the processes should be determined according to functions and internal logic of the processes, and should not be construed as any limitation on the implementation processes of embodiments of this application.

In embodiments of this application, the "protocol" may refer to a standard protocol in the communications field, and may include, for example, a Wi-Fi protocol, and a related protocol applied to a future Wi-Fi communications system, which is not limited in this application.

In several embodiments provided in this application, it should be understood that the disclosed system, apparatus, and method may be implemented in another manner. For example, the described apparatus embodiments are merely examples. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented as indirect couplings or communication connections through some interfaces, apparatus or units, and may be implemented in electronic, mechanical, or other forms.

The units described as separate parts may or may not be physically separate, and parts displayed as units may or may not be physical units, and may be located in one position, or may be distributed on a plurality of network units. Some or all of the units may be selected according to actual needs to achieve the objective of the solutions of embodiments.

In addition, functional units in embodiments of this application may be integrated into one processing unit, or each of the units may exist alone physically, or two or more units may be integrated into one unit.

All or some of the foregoing embodiments may be implemented by using software, hardware, firmware, or any combination thereof. When software is used to implement embodiments, the foregoing embodiments may be implemented completely or partially in a form of a computer program product. The computer program product includes one or more computer instructions. When the computer program instructions are loaded and executed on a computer, the procedures or functions according to embodiments of this application are completely or partially generated. The computer may be a general-purpose computer, a dedicated computer, a computer network, or another programmable apparatus. The computer instructions may be stored in a computer-readable storage medium or transmitted from one computer-readable storage medium to another computer-readable storage medium. For example, the computer instructions may be transmitted from a website, computer, server, or data center to another website, computer, server, or data center in a wired (for example, a coaxial cable, an optical fiber, and a digital subscriber line (digital subscriber line, DSL)) manner or a wireless (for example, infrared, wireless, and microwave) manner. The computer-readable storage medium may be any usable medium readable by the computer, or a data storage device, such as a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium (for example, a solid-state drive (solid state disk, SSD)), or the like.

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

## Claims

1. A wireless communication method, wherein the method comprises:
transmitting, by a first access point AP, a first trigger frame,
wherein the first trigger frame comprises first information and second information, the first information is used to instruct a second AP to perform multi-AP coordinated transmission on a first bandwidth, the second information is used to instruct a first station STA to communicate with the first AP on a second bandwidth, and both the first bandwidth and the second bandwidth belong to an operating bandwidth of the first AP.

2. The method according to claim 1, wherein the first trigger frame is a multi-AP trigger frame.

3. The method according to claim 1 or 2, wherein the first trigger frame further comprises third information, and the third information is used to indicate a sum of the first bandwidth and the second bandwidth.

4. The method according to claim 3, wherein the third information is carried in a downlink bandwidth field of a common information field and a downlink bandwidth extension field of a special user information field.

5. The method according to any one of claims 1 to 4, wherein the first information or the second information is carried in a first field, and the first field comprises a device identity field; and
in a case in which a value of the device identity field belongs to an AP identity range, the first field carries the first information; or
in a case in which the value of the device identity field belongs to an STA identity range, the first field carries the second information.

6. The method according to claim 5, wherein the first field comprises a variant user information field, and the device identity field comprises an AID12 field.

7. The method according to any one of claims 1 to 6, wherein information about the first bandwidth or information about the second bandwidth is carried in one or more of following fields: a resource unit allocation field of a variant user information field, a PS160 field of a variant user information field, a downlink bandwidth field of a common information field, or a downlink bandwidth extension field of a special user information field.

8. The method according to claim 7, wherein
the information about the first bandwidth comprises a resource unit RU or a multiple resource unit MRU corresponding to the first bandwidth; and
the information about the second bandwidth comprises an RU or MRU corresponding to the second bandwidth.

9. The method according to any one of claims 1 to 8, wherein the method further comprises:
receiving, by the first AP, fourth information,
wherein the fourth information is used to indicate first duration, and the first duration is time required by the first STA to switch an operating channel to the second bandwidth.

10. The method according to claim 9, wherein the fourth information is carried in a capability element.

11. The method according to claim 9 or 10, wherein the method further comprises:
padding, by the first AP, the first trigger frame based on the first duration.

12. The method according to claim 11, wherein the first STA is one of a plurality of STAs, and in a case in which the first AP communicates with the plurality of STAs on the second bandwidth, the padding, by the first AP, the first trigger frame based on the first duration comprises:
padding, by the first AP, the first trigger frame based on second duration, wherein the second duration is determined based on time required by the plurality of STAs to switch operating channels to the second bandwidth.

13. The method according to claim 12, wherein the second duration is a maximum value of time required by the plurality of STAs to switch operating channels to the second bandwidth.

14. The method according to any one of claims 1 to 13, wherein communication between the first STA and the first AP is in a first transmission mode, and the first transmission mode comprises one or more of following: single-user transmission, multi-user multiple-input multiple-output transmission, orthogonal frequency division multiple access transmission, or non-orthogonal frequency division multiple access transmission.

15. A wireless communication method, wherein the method comprises:
receiving, by a first device, a first trigger frame transmitted by a first access point AP,
wherein the first device comprises a second AP and/or a first station STA, the first trigger frame comprises first information and second information, the first information is used to instruct the second AP to perform multi-AP coordinated transmission on a first bandwidth, the second information is used to instruct the first STA to communicate with the first AP on a second bandwidth, and both the first bandwidth and the second bandwidth belong to an operating bandwidth of the first AP.

16. The method according to claim 15, wherein the first trigger frame is a multi-AP trigger frame.

17. The method according to claim 15 or 16, wherein the first trigger frame further comprises third information, and the third information is used to indicate a sum of the first bandwidth and the second bandwidth.

18. The method according to claim 17, wherein the third information is carried in a downlink bandwidth field of a common information field and a downlink bandwidth extension field of a special user information field.

19. The method according to any one of claims 15 to 18, wherein the first information or the second information is carried in a first field, and the first field comprises a device identity field; and
in a case in which a value of the device identity field belongs to an AP identity range, the first field carries the first information; or
in a case in which the value of the device identity field belongs to an STA identity range, the first field carries the second information.

20. The method according to claim 19, wherein the first field comprises a variant user information field, and the device identity field comprises an AID12 field.

21. The method according to any one of claims 15 to 20, wherein information about the first bandwidth or information about the second bandwidth is carried in one or more of following fields: a resource unit allocation field of a variant user information field, a PS160 field of a variant user information field, a downlink bandwidth field of a common information field, or a downlink bandwidth extension field of a special user information field.

22. The method according to claim 21, wherein
the information about the first bandwidth comprises a resource unit RU or a multiple resource unit MRU corresponding to the first bandwidth; and
the information about the second bandwidth comprises an RU or MRU corresponding to the second bandwidth.

23. The method according to any one of claims 15 to 22, wherein the first device comprises the first STA, and the method further comprises:
transmitting, by the first STA, fourth information to the first AP,
wherein the fourth information is used to indicate first duration, and the first duration is time required by the first STA to switch an operating channel to the second bandwidth.

24. The method according to claim 23, wherein the fourth information is carried in a capability element.

25. The method according to claim 23 or 24, wherein the method further comprises: switching, by the first STA, an operating channel to the second bandwidth.

26. The method according to claim 25, wherein the method further comprises:
switching, by the first STA, the operating channel back to a primary channel of the first STA in response to an end of a frame interaction sequence between the first STA and the first AP.

27. The method according to any one of claims 15 to 26, wherein communication between the first STA and the first AP is in a first transmission mode, and the first transmission mode comprises one or more of following: single-user transmission, multi-user multiple-input multiple-output transmission, orthogonal frequency division multiple access transmission, or non-orthogonal frequency division multiple access transmission.

28. A communications device, wherein the communications device is a first access point AP, and the communications device comprises:
a transmitting unit, configured to transmit a first trigger frame,
wherein the first trigger frame comprises first information and second information, the first information is used to instruct a second AP to perform multi-AP coordinated transmission on a first bandwidth, the second information is used to instruct a first station STA to communicate with the first AP on a second bandwidth, and both the first bandwidth and the second bandwidth belong to an operating bandwidth of the first AP.

29. The communications device according to claim 28, wherein the first trigger frame is a multi-AP trigger frame.

30. The communications device according to claim 28 or 29, wherein the first trigger frame further comprises third information, and the third information is used to indicate a sum of the first bandwidth and the second bandwidth.

31. The communications device according to claim 30, wherein the third information is carried in a downlink bandwidth field of a common information field and a downlink bandwidth extension field of a special user information field.

32. The communications device according to any one of claims 28 to 31, wherein the first information or the second information is carried in a first field, and the first field comprises a device identity field; and
in a case in which a value of the device identity field belongs to an AP identity range, the first field carries the first information; or
in a case in which the value of the device identity field belongs to an STA identity range, the first field carries the second information.

33. The communications device according to claim 32, wherein the first field comprises a variant user information field, and the device identity field comprises an AID12 field.

34. The communications device according to any one of claims 28 to 33, wherein information about the first bandwidth or information about the second bandwidth is carried in one or more of following fields: a resource unit allocation field of a variant user information field, a PS160 field of a variant user information field, a downlink bandwidth field of a common information field, or a downlink bandwidth extension field of a special user information field.

35. The communications device according to claim 34, wherein
the information about the first bandwidth comprises a resource unit RU or a multiple resource unit MRU corresponding to the first bandwidth; and
the information about the second bandwidth comprises an RU or MRU corresponding to the second bandwidth.

36. The communications device according to any one of claims 28 to 35, wherein the communications device is further configured to:
receive fourth information,
wherein the fourth information is used to indicate first duration, and the first duration is time required by the first STA to switch an operating channel to the second bandwidth.

37. The communications device according to claim 36, wherein the fourth information is carried in a capability element.

38. The communications device according to claim 36 or 37, wherein the communications device is further configured to:
pad the first trigger frame based on the first duration.

39. The communications device according to claim 38, wherein the first STA is one of a plurality of STAs, and in a case in which the first AP communicates with the plurality of STAs on the second bandwidth, the padding, by the first AP, the first trigger frame based on the first duration comprises:
padding, by the first AP, the first trigger frame based on second duration, wherein the second duration is determined based on time required by the plurality of STAs to switch operating channels to the second bandwidth.

40. The communications device according to claim 39, wherein the second duration is a maximum value of time required by the plurality of STAs to switch operating channels to the second bandwidth.

41. The communications device according to any one of claims 28 to 40, wherein communication between the first STA and the first AP is in a first transmission mode, and the first transmission mode comprises one or more of following: single-user transmission, multi-user multiple-input multiple-output transmission, orthogonal frequency division multiple access transmission, or non-orthogonal frequency division multiple access transmission.

42. A communications device, wherein the communications device is a first device, and the communications device comprises:
a receiving unit, configured to receive a first trigger frame transmitted by a first access point AP,
wherein the first device comprises a second AP and/or a first station STA, the first trigger frame comprises first information and second information, the first information is used to instruct the second AP to perform multi-AP coordinated transmission on a first bandwidth, the second information is used to instruct the first STA to communicate with the first AP on a second bandwidth, and both the first bandwidth and the second bandwidth belong to an operating bandwidth of the first AP.

43. The communications device according to claim 42, wherein the first trigger frame is a multi-AP trigger frame.

44. The communications device according to claim 42 or 43, wherein the first trigger frame further comprises third information, and the third information is used to indicate a sum of the first bandwidth and the second bandwidth.

45. The communications device according to claim 44, wherein the third information is carried in a downlink bandwidth field of a common information field and a downlink bandwidth extension field of a special user information field.

46. The communications device according to any one of claims 42 to 45, wherein the first information or the second information is carried in a first field, and the first field comprises a device identity field; and
in a case in which a value of the device identity field belongs to an AP identity range, the first field carries the first information; or
in a case in which the value of the device identity field belongs to an STA identity range, the first field carries the second information.

47. The communications device according to claim 46, wherein the first field comprises a variant user information field, and the device identity field comprises an AID12 field.

48. The communications device according to any one of claims 42 to 47, wherein information about the first bandwidth or information about the second bandwidth is carried in one or more of following fields: a resource unit allocation field of a variant user information field, a PS160 field of a variant user information field, a downlink bandwidth field of a common information field, or a downlink bandwidth extension field of a special user information field.

49. The communications device according to claim 48, wherein
the information about the first bandwidth comprises a resource unit RU or a multiple resource unit MRU corresponding to the first bandwidth; and
the information about the second bandwidth comprises an RU or MRU corresponding to the second bandwidth.

50. The communications device according to any one of claims 42 to 49, wherein the first device comprises the first STA, and the communications device is further configured to:
transmit fourth information to the first AP,
wherein the fourth information is used to indicate first duration, and the first duration is time required by the first STA to switch an operating channel to the second bandwidth.

51. The communications device according to claim 50, wherein the fourth information is carried in a capability element.

52. The communications device according to claim 50 or 51, wherein the communications device is further configured to:
switch an operating channel to the second bandwidth.

53. The communications device according to claim 52, wherein the communications device is further configured to:
switching the operating channel back to a primary channel of the first STA in response to an end of a frame interaction sequence between the first STA and the first AP.

54. The communications device according to any one of claims 42 to 53, wherein communication between the first STA and the first AP is in a first transmission mode, and the first transmission mode comprises one or more of following: single-user transmission, multi-user multiple-input multiple-output transmission, orthogonal frequency division multiple access transmission, or non-orthogonal frequency division multiple access transmission.

55. A communications device, comprising a memory and a processor, wherein the memory is configured to store a program, and the processor is configured to invoke the program in the memory to cause the communications device to execute the method according to any one of claims 1 to 27.

56. An apparatus, comprising a processor configured to invoke a program from a memory, to cause the apparatus to execute the method according to any one of claims 1 to 27.

57. A chip, comprising a processor, configured to invoke a program from a memory to cause a device installed with the chip to execute the method according to any one of claims 1 to 27.

58. A computer-readable storage medium, wherein the computer-readable storage medium stores a program, and the program causes a computer to execute the method according to any one of claims 1 to 27.

59. A computer program product, comprising a program that causes a computer to execute the method according to any one of claims 1 to 27.

60. A computer program, wherein the computer program causes a computer to execute the method according to any one of claims 1 to 27.
